(19) **Europäisches Patentamt / European Patent Office / Office européen des brevets**

(11) **EP 1 784 027 B1**

(12) **EUROPEAN PATENT SPECIFICATION**

(45) Date of publication and mention
of the grant of the patent:
**06.01.2010 Bulletin 2010/01**

(51) Int Cl.:
*H04Q 3/00* (2006.01)      *H04L 12/24* (2006.01)
*H04L 12/26* (2006.01)

(21) Application number: **06023068.7**

(22) Date of filing: **06.11.2006**

(54) **Network performance management**

Netzleistungsverwaltung

Gestion de performance de réseau

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **07.11.2005 EP 05024234**

(43) Date of publication of application:
**09.05.2007 Bulletin 2007/19**

(73) Proprietor: **Accenture Global Services GmbH
8200 Schaffhausen (CH)**

(72) Inventors:
• **Healy, Desmond
53773 Hennef (Sieg) (DE)**
• **Schornstein, Stefan
52078 Aachen (DE)**
• **Hausammann, Rolf
CH-3074 Muri (CH)**

(74) Representative: **Müller-Boré & Partner
Patentanwälte
Grafinger Strasse 2
81671 München (DE)**

(56) References cited:
• **LIBERAL F ET AL: "Application of general
perception-based QoS model to find providers'
responsibilities. Case study: user perceived Web
service performance" PROCEEDINGS OF THE
2005 JOINT INTERNATIONAL CONFERENCE ON
AUTONOMIC AND AUTONOMOUS SYSTEMS
AND INTERNATIONAL CONFERENCE ON
NETWORKING AND SERVICES (ICAS/ICNS
2005), PAPEETE, TAHITI, FRENCH POLYNESIA,
23 October 2005 (2005-10-23), - 28 October 2005
(2005-10-28) pages 1-6, XP002419962 ISBN:
0-7695-2725-6**
• **"Communications quality of service: A
framework and definitions" ITU-T G.1000,
November 2001 (2001-11), XP017400619**

## Description

The present invention relates to controlling and management of network performance. The invention may particularly be applied in telecommunication providing companies (such as by means of cellular phone) and/or internet service providing companies, where service quality is seen as a key differentiator.

BACKGROUND TECHNOLOGY

Today, service quality is seen as an important aspect within the telecommunications industry. To be successful in that area it is important to greatly enhance the service quality perceived by the customer. Therefore the quality as perceived by the customer needs to be measured and managed. Up until now the quality perceived by the customer could not be measured. Nowadays only technical key performance indicators (KPIs) are measured that are not linked to the quality perceived by the customer. Investments are made on a "best effort" basis leading to over investments in certain parts of the production platform and to under investments in others.

F. Liberal et al. in "Application of General Perception-Based QoS Model to Find Providers' Responsibilities. Case Study: User Perceived Web Service Performance.", proceedings of the 2005 joint international conference on autonomic and autonomous systems and international conference on networking and services (ICAS/ICNS 2005), Papeete, Tahiti, French Polynesia, October 23 to 28, 2005, pages 1 to 6, ISBN: 0-7695-2725-6, describes a model intended to analyze quality of service in telecommunications services and its causes. It is suggested to analyze quality of service as a general gauge of final users' satisfaction and to estimate the quality experienced by end users, while offering detailed results regarding the responsibility of the different agents involved in the service provision. It is described to identify agents and their functions on the one hand, and services and their perceptions on the other hand. Based on these identifications it is suggested to analyze the relations between a given perception of a service and the functions provided by different agents. For each of these matches indicators are defined in order to estimate the weight and relationship that given parameters within a function have with the considered perception.

SUMMARY OF THE INVENTION

Thus, according to an aspect, it is a problem to provide a method, a computer program product and a system for controlling a network in order to facilitate a reliable and flexible network management in view of an improvement of a service quality received by a customer even within highly complex networks that comprise a plurality of network components and deliver end customer services, such as mobile telecommunication based services.

This problem is solved by a method, a computer program product and a system having the features disclosed in claims 1, 9, and 10, respectively. Preferred embodiments are defined in the dependent subclaims.

Accordingly, the present invention provides a computer-implemented method of controlling a performance of a network, where the network comprises a plurality of network components and delivers an end customer service, the method comprising the steps of:

- receiving a set of key quality parameters (key quality indicators), wherein each key quality parameter represents a characteristic of at least one network component;
- providing a service quality mapping function defining a correlation between the set of key quality parameters and a set of customer quality parameters (customer quality indicators) depending on the network components involved in the delivered end customer service;
- applying the service quality mapping function to the received set of key quality parameters to obtain the set of customer quality parameters; and
- outputting a signal representing at least one customer quality parameter.

Accordingly, the present invention enables a user to measure and manage customer experience in addition to pure net work performance. It is of particular advantage to be able to monitor and manage a service delivery chain, for example an end-to-end service delivery chain, instead of single service components only. As a further advantage, the present invention allows to monitor and manage a correlation of performance data with customer perception in addition to performance indicator on individual levels. In particular, the present invention enables a real view of the actual quality delivered to the end customer. In this connection controlling a performance of a network exemplarily comprises monitoring the performance and/or triggering actions.

Exemplarily, the service quality mapping function defines for each customer quality parameter a linear dependency on at least one key quality parameter via a set of service quality weighting factors.

Providing a service quality mapping function comprises providing a service quality mapping module which defines

- a set of service quality parameters (service quality indicators) comprising at least one service quality parameter for each network component involved in the delivered end customer service;
- a first correlation function defining a correlation between the set of key quality parameters and the set of service quality parameters; and
- a second correlation function defining a correlation between the set of service quality parameters and the set of customer quality parameters; and

wherein the step of applying the service quality mapping function to the received set of key quality parameters comprises a step of applying the service quality mapping module to the received set of key quality parameters.

The step of applying the service quality mapping module to the received set of key quality parameters to obtain the set of customer quality parameters comprises the steps of:

- applying the first correlation function to the received set of key quality parameters to obtain the set of service quality parameters; and
- applying the second correlation function to the obtained set of service quality parameters to obtain the set of customer quality parameters.

In one aspect of the invention, the delivered end customer service may comprise a plurality of service instances (service components) delivered to an end customer, and

wherein providing a service quality mapping function comprises providing for each service instance an instance quality mapping module which defines

-- a set of service quality parameters comprising at least one service quality parameter for each network component involved in the respective service instance;
-- a first correlation function defining a correlation between the set of key quality parameters and the set of service quality parameters; and
-- a second correlation function defining a correlation between the set of service quality parameters and the set of customer quality parameters; and

wherein the step of applying the service quality mapping function to the received set of key quality parameters comprises a step of applying for each service instance the instance quality mapping module to the received set of key quality parameters to obtain for each service instance a separate set of customer quality parameters.

A service instance exemplarily represents an end-to-end chain of network components involved in one application offered to the end customer as part of an end customer service. Some of the service instances may comprise a non-branched chain of network components. Other service instances may comprise a branched chain of network components. The chain of network components exemplarily form a closed chain of interacting and/or communicating network components for delivering one element and/or one task and/or one component of the end customer service from a service provider to the end customer.

Alternatively or additionally, the instance quality mapping modules within each end customer service are combined to from the service quality mapping module. In another aspect the service quality mapping modules for a plurality of end customer services may be combined. For example, the end customer services may be pooled into customer segments such that at some of the end customer services delivered to end customers within the same customer segment are grouped into the same service pool. In this case a pool quality mapping module may be provided which defines

-- a set of service quality parameters comprising at least one service quality parameter for each network component involved in the respective service pool;
-- a first correlation function defining a correlation between the set of key quality parameters and the set of service quality parameters; and
-- a second correlation function defining a correlation between the set of service quality parameters and the set of customer quality parameters. The step of applying the service quality mapping function to the received set of key quality parameters may then comprise a step of applying for each service pool the instance quality mapping module to the received set of key quality parameters to obtain for each service pool a combined set of customer quality parameters.

The separate sets of customer quality parameters may be combined to obtain one set of customer quality parameter. Alternatively, the instance quality mapping modules of all service instances within one end customer service may be combined to obtain the service quality mapping module. In one example, combining the sets of customer quality indicators and/or combining the instance quality mapping modules may be obtained by adding their values weighted with a respective instances weighting factor.

Exemplarily, the step of applying the instance quality mapping module to the received set of key quality parameters to obtain the set of customer quality parameters comprises for each service instance the steps of:

- applying the first correlation function to the received set of key quality parameters to obtain the set of service quality parameters; and
- applying the second correlation function to the obtained set of service quality parameters to obtain the set of customer quality parameters.

Exemplarily, the first correlation function defines for each service quality parameter a linear dependency on at least one key quality parameter via a set of first correlation weighting factors; and/or wherein the second correlation function defines for each customer quality parameter a linear dependency on at least one service quality parameter via a set of second correlation weighting factors.

Exemplarily, the set of key quality parameters and/or the set of customer quality parameters have identical structure for a plurality of service quality mapping function, i.e. the number and meaning of the parameter are same, while their particular values are obtained by means of the respective service quality mapping function. Particularly, the internal structure, i.e. the number and structuring of the service quality parameters as well as the first and second correlation functions may differ between different end customer services and/or different service instances and/or different service pools. This enables a modular construction of a system according to one exemplary aspect of the invention and facilitates adaptation and customization of the method and the system to a particular situation.

Exemplarily, receiving the set of key quality parameters comprises

- receiving a plurality of trigger signals (trigger data) each representing a characteristic of at least one network component;
- transforming the plurality of trigger signals into the set of key quality parameters by applying a normalized grading scheme.

Exemplarily, each trigger signal defines a separate characteristic parameter of the network performance. In one example at least some of the characteristic parameters are automatically retrieved from the network by means of a sensing unit. In another example at least some of the characteristic parameters are manually input.

Some of the received trigger signals may be continuous, i.e. they may have continuous values such as a net speed, a bandwidth, a delay time, a size of data package, etc.. Other trigger signals may represent discrete values, such as binary values, e.g. conditions like "connected" or "disconnected", data transmission "in progress" or "completed", or an indication that the customer is "online" or "offline", etc.. The normalized grading scheme may represent a scheme which assigns to each of the received trigger signals a real number and/or an analog or digital signal, for example, which makes the trigger signals comparable to each other. The normalized grading scheme may be implemented as an adapter correlation function or a third correlation function defining a correlation between the plurality of received trigger signals and the set of key quality parameters. The trigger signals may comprise key performance indicators and/or process performance indicators and/or operational performance indicators. In one example a plurality of trigger signals may be combined to be transformed to one key quality parameter.

Exemplarily, the set of key quality parameters and/or the set of service quality parameters and/or the set of customer quality parameters are/is structured into a plurality of responsibility pools such that each key quality parameter and/or each service quality parameter and/or each customer quality parameter belongs to at least one responsibility pool, and wherein the method comprises the steps of:

- determining for at least one customer quality parameter, exemplarily for each customer quality parameter within the obtained set of customer quality parameters a parameter correlation set defining all key quality parameters and/or all service quality parameters that are upwardly and/or downwardly correlated with the respective customer quality parameter via the service quality mapping function and/or the first correlation function and/or the second correlation function; and
- determining for each customer quality parameter a responsibility set defining all responsibility pools containing at least one parameter from the parameter correlation set of the respective customer quality parameter,

wherein the step of outputting a signal representing at least one customer quality parameter comprises sending said signal to responsible departments depending on the determined responsibility set.

By means of the service quality mapping function and/or the first and/or second correlation function the customer quality parameters are correlated to the key quality parameters, e.g. via the service quality parameter. In this connection, the correlation path from the customer quality parameter in direction to the key quality parameter is called "downward", while the other direction is referred to as "upward".

The method further comprises the steps of:

- retrieving service level agreement data from an end customer database, where the service level agreement data comprise at least one predetermined key quality parameter and/or at least one predetermined service quality parameter and/or at least one predetermined customer quality parameter; and
- determining a deviation of the received key quality parameters and/or the obtained service quality parameters and/or the obtained set of customer quality parameters from the respective predetermined parameter of the service level agreement data; and

wherein outputting a signal comprises outputting a notification about a determined deviation. Exemplarily, outputting a signal is only performed if the deviation exceeds a primary threshold value.

The set of key quality parameters and/or the set of service quality parameters and/or the set of customer quality parameters are/is structured into a plurality of responsibility pools such that each key quality parameter and/or each service quality parameter and/or each customer quality parameter belongs to at least one responsibility pool, and wherein the method comprises the steps of:

- determining for at least one determined deviation, exemplarily for each determined deviation from the service agreement data a deviation correlation set defining all parameters that are upwardly and/or downwardly correlated with the deviating parameter via the service quality mapping function and/or the first correlation function and/or the second correlation function;
- determining for the at least one determined deviation, exemplarily for each deviating parameter a deviation responsibility set defining all responsibility pools containing at least one parameter from the deviation correlation set of the respective deviating parameter;

wherein the step of outputting a notification about the determined deviation comprises sending said notification to responsible departments depending on the determined deviation responsibility set. In one example, sending said notification is only performed if the deviation exceeds a secondary threshold value which is exemplarily higher than the primary threshold value.

In another aspect the present invention provides a computer program product comprising program code, which when loaded in a computer system causes the system to perform steps according to a method of the present invention or a preferred embodiment thereof.

Further, the present invention provides a system for controlling a performance of a network, where the network comprises a plurality of network components and delivers an end customer service, the system comprising:

- a trigger interface for receiving a set of key quality parameter, wherein each key quality parameter represents a characteristic of at least one network component;
- a mapping model repository for storing a service quality mapping function defining a correlation between the set of key quality parameters and a set of customer quality parameters (customer quality indicators) depending on the network components involved in the delivered end customer service;
- a mapping engine for applying the service quality mapping function to the received set of key quality parameters to obtain the set of customer quality parameters; and
- a control interface for outputting a signal representing at least one customer quality parameter.

The mapping model repository stores a service quality mapping module which defines

- a set of service quality parameters comprising at least one service quality parameter for each network component involved in the delivered end customer service;
- a first correlation function defining a correlation between the set of key quality parameters and the set of service quality parameters; and
- a second correlation function defining a correlation between the set of service quality parameters and the set of customer quality parameters; and

wherein the mapping engine is configured to apply the service quality mapping module to the received set of key quality parameters.

Exemplarily, the delivered end customer service comprises a plurality of service instances delivered to an end customer, and wherein the mapping model repository stores for each service instance an instance quality mapping module which defines

-- a set of service quality parameters comprising at least one service quality parameter for each network component involved in the respective service instance;

-- a first correlation function defining a correlation between the set of key quality parameters and the set of service quality parameters; and

-- a second correlation function defining a correlation between the set of service quality parameters and the set of customer quality parameters; and

wherein the mapping engine is configured to apply for each service instance the instance quality mapping module to the received set of key quality parameters to obtain for each service instance a separate set of customer quality indicators.

In one example, the trigger interface comprises a plurality of adapter components for receiving a plurality of trigger signals each representing a characteristic of at least one network component and where the plurality of adapter components are configured to transform the plurality of trigger signals into the set of key quality parameters by applying a normalized grading scheme. The plurality of adapter components may be comprised in an adapter tool kit of the trigger interface.

Exemplarily, the mapping model repository, particularly data such as the service quality mapping function stored in the mapping model repository, comprises a plurality of responsibility pools such that each key quality parameter and each service quality parameter and each customer quality parameter belongs to at least one responsibility pool, and wherein the system further comprises

- a correlator for determining for each customer quality parameter within the obtained set of customer quality parameters a parameter correlation set defining all key quality parameters and/or all service quality parameters that are upwardly and/or downwardly correlated with the respective customer quality parameter via the service: quality mapping function and/or the first correlation function and/or the second correlation function; and
- a responsibility evaluation unit for determining for each customer quality parameter a responsibility set defining all responsibility pools containing at least one parameter from the parameter correlation set of the respective customer quality parameter; and

wherein the control interface comprises responsibility department interfaces and is configured to send said signal to the responsibility department interfaces or to output said signal via at least one of the responsibility department interfaces depending on the determined responsibility set.

The system further comprises:

- an end customer database storing service level agreement data, where the service level agreement data comprise at least one predetermined key quality parameter and/or at least one predetermined service quality parameter and/or at least one predetermined customer quality parameter; and
- a deviation monitor for determining a deviation of the received key quality parameters and/or the obtained service quality parameters and/or the obtained set of customer quality parameters from the respective predetermined parameter of the service level agreement data,

wherein the control interface is configured to output a notification about a determined deviation.

The mapping model repository, exemplarily data such as the service quality mapping function stored in the mapping model repository, comprises a plurality of responsibility pools such that each key quality parameter and each service quality parameter and each customer quality parameter belongs to at least one responsibility pool, and wherein the system further comprises

- a deviation correlator for determining for each determined deviation from the service agreement data a deviation correlation set defining all parameters that are downwardly correlated with the deviating parameter via the service quality mapping function and/or the first correlation function and/or the second correlation function; and
- a deviation responsibility evaluation unit for determining for each deviating parameter a deviation responsibility set defining all responsibility pools containing at least one parameter from the deviation correlation set of the respective deviating parameter; and

wherein the control interface comprises responsibility department interfaces and is configured to output said notification about the determined deviation via at least one of the responsibility department interfaces depending on the determined responsibility set.

In one example, the system is capable of performing operations of a method according to the present invention or a preferred embodiment thereof.

The invention can be implemented in digital electronic circuitry, or in computer hardware, firmware, software, or in combinations of them. The invention can be implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network. Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks such as internal hard disks and removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device such as a CRT (cathode ray tube) or LCD (liquid crystal display) monitor for displaying information to the user and a keyboard and a pointing device such as a mouse or a trackball by which the user can provide input to the computer. Other kinds of devices can be used to provide for interaction with a user as well; for example, feedback provided to the user can be any form of sensory feedback, such as visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or an Web browser through which a user can interact with an implementation of the invention, or any combination of such back-end, middleware, or front-end components. The components of the system can be interconnected by any form or medium of digital data communication, e.g., a communication network. Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

The present invention provides a system, a method, and a computer program product as a support tool for establishing and/or managing a relationship between a quality as perceived by the customer and an underlying technology and/or process performance, exemplarily based on end-to-end service views. In one example, the present invention includes the needed metrics, processes and technology to analyse and manage the service quality that is actually delivered to a customer or a plurality of customers.

In one example, the present invention allows to incorporate and manage service quality aspects along the service delivery chain. In particular, it provides telecommunication provider with a tool that is easy to handle by a user and which ensures an improved reliability and flexibility in supporting to tune technology and processes to maxmize the delivered service quality and to redirect investments at the right place.

In one example, the present invention manages customer perception at least partly based on a predetermined and/or adaptable correlation of received performance data with customer perception data. This may be referred to as a "top-down approach" as compared to "bottom-up approach" which is rather directed to manage network performance instead of customer perception.

These and other objects, features and advantages of the present invention will become more apparent by means of accompanying drawings exemplary aspects of the invention. It should be understood that even though embodiments are separately depicted, single features thereof may be combined to additional embodiments.

Fig. 1  shows an exemplary system for implementing the present invention or a preferred embodiment thereof;

Fig. 2  shows an exemplary network to be managed according to the present invention;

Fig. 3A          shows a schematic of an exemplary system according to one aspect of the invention;

Fig. 3B          shows a more detailed schematic of a mapping engine according to one exemplary aspect of the invention;

Fig. 4           shows a schematic view of an exemplary service quality mapping module according to one aspect of the invention;

Fig. 5           shows a more detailed schematic of an exemplary service quality mapping module according to another aspect of the invention; and

Figs. 6A, 6B     show schematic structuring of exemplary service quality mapping modules according to one aspect of the invention.

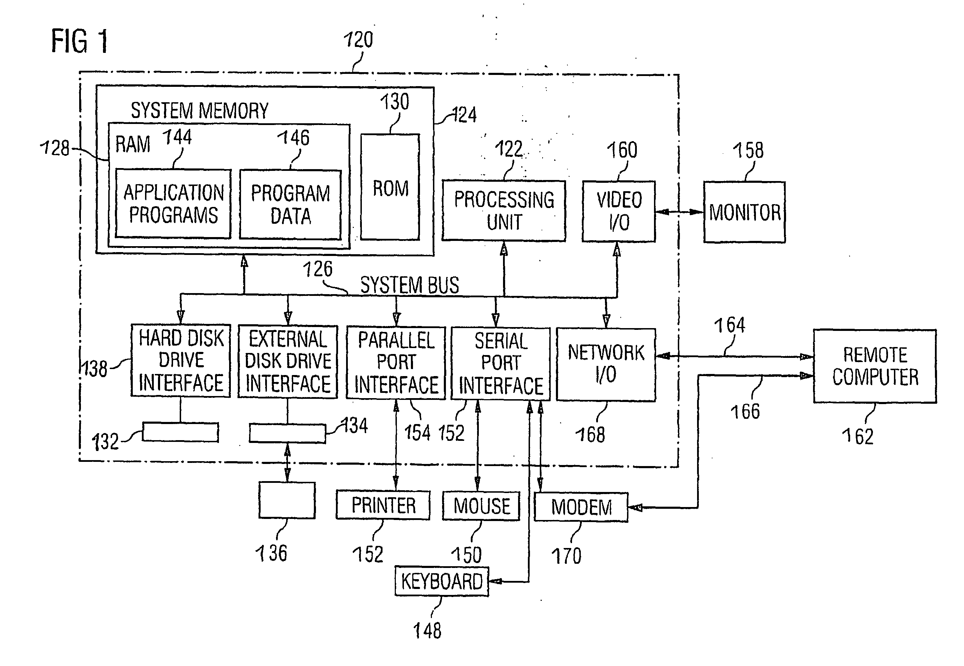

With reference to **Fig. 1**, an exemplary system for implementing the invention includes a general purpose computing device in the form of a conventional computing environment 120 (e.g. personal computer), including a processing unit 122, a system memory 124, and a system bus 126, that couples various system components including the system memory 124 to the processing unit 122. The processing unit 122 may perform arithmetic, logic and/or control operations by accessing system memory 124. The system memory 124 may store information and/or instructions for use in combination with processing unit 122. The system memory 124 may include volatile and non-volatile memory, such as random access memory (RAM) 128 and read only memory (ROM) 130. A basic input/output system (BIOS) containing the basic routines that helps to transfer information between elements within the personal computer 120, such as during start-up, may be stored in ROM 130. The system bus 126 may be any of several types of bus structures including a memory bus or memory controller, a peripheral bus, and a local bus using any of a variety of bus architectures.

The personal computer 120 may further include a hard disk drive 132 for reading from and writing to a hard disk (not shown), and an external disk drive 134 for reading from or writing to a removable disk 136. The removable disk may be a magnetic disk for a magnetic disk driver or an optical disk such as a CD ROM for an optical disk drive. The hard disk drive 134 and external disk drive 134 are connected to the system bus 126 by a hard disk drive interface 138 and an external disk drive interface 140, respectively. The drives and their associated computer-readable media provide nonvolatile storage of computer readable instructions, data structures, program modules and other data for the personal computer 120. The data structures may include relevant data of the implementation of the present invention, as described in more details below. The relevant data may be organized in a database, for example a relational or object database.

Although the exemplary environment described herein employs a hard disk (not shown) and an external disk 142, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk 142, ROM 130 or RAM 128, including an operating system (not shown), one or more application programs 144, other program modules (not shown), and program data 146. The application programs may include at least a part of the functionality according to the present invention.

A user may enter commands and information, as discussed below, into the personal computer 120 through input devices such as keyboard 148 and mouse 150. Other input devices (not shown) may include a microphone (or other sensors), joystick, game pad, scanner, or the like. These and other input devices may be connected to the processing unit 122 through a serial port interface 152 that is coupled to the system bus 126, or may be collected by other interfaces, such as a parallel port interface 154, game port or a universal serial bus (USB). Further, information may be printed using printer 156. The printer 156, and other parallel input/output devices may be connected to the processing unit 122 through parallel port interface 154. A monitor 158 or other type of display device is also connected to the system bus 126 via an interface, such as a video input/output 160. In addition to the monitor, computing environment 120 may include other peripheral output devices (not shown), such as speakers or other audible output.

The computing environment 120 may communicate with other electronic devices such as a computer, telephone (wired or wireless), personal digital assistant, television, or the like. To communicate, the computer environment 120 may operate in a networked environment using connections to one or more electronic devices. **Fig. 1** depicts the computer environment networked with remote computer 162. The remote computer 162 may be another computing environment such as a server, a router, a network PC, a peer device or other common network node, and may include many or all of the elements described above relative to the computing environment 120. The logical connections depicted in **Fig. 1** include a local area network (LAN) 164 and a wide area network (WAN) 166. Such networking environments are commonplace in offices, enterprise-wide computer networks, intranets and the Internet.

When used in a LAN networking environment, the computing environment 120 may be connected to the LAN 164 through a network I/O 168. When used in a WAN networking environment, the computing environment 120 may include a modem 170 or other means for establishing communications over the WAN 166. The modem 170, which may be internal or external to computing environment 120, is connected to the system bus 126 via the serial port interface 152. In a networked environment, program modules depicted relative to the computing environment 120, or portions thereof, may be stored in a remote memory storage device resident on or accessible to remote computer 162. Furthermore other data relevant to the application of the insurance claim management evaluation method (described in more detail further below) may be resident on or accessible via the remote computer 162. The data may be stored for example in an object or a relation database. It will be appreciated that the network connections shown are exemplary and other means of establishing a communications link between the electronic devices may be used.

The above-described computing system is only one example of the type of computing system that may be used to implement the present invention.

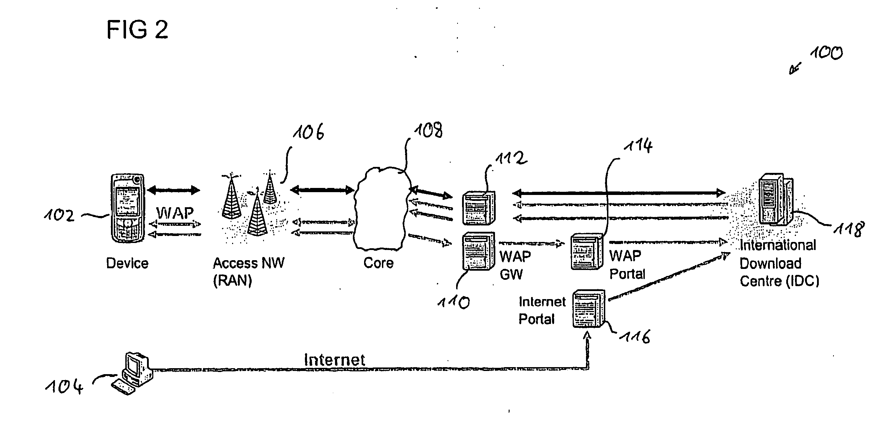

Other objects, features and advantages of the present invention in various aspects are apparent to the person skilled in the art by the enclosed Figs. 2 to 6. It should be understood that even though examples may be separately illustrated and schematically set out, single features thereof may be combined to additional examples of the invention.

**Fig. 2** shows an exemplary network 100 comprising a plurality of network components such as a first device 102, a second device 104, an access network 106, a core network 108, a WAP gateway 110, an SMS server 112, a WAP portal 114, an Internet Portal 116, and a 3rd party download center 118. In addition to the explicitly shown hardware components and network equipment, the network 100 may also comprise applications running on individual devices and/or on a linked combination of more than one devices simultaneously. Such applications may interact with the devices and/or the network transport structure. Exemplarily, the complete network including hardware components, transmission performance, applications, portal functions, information provided to the end user of the first device 102 and/or the second device 104, etc. is considered as a network 100 to be controlled by the present invention.

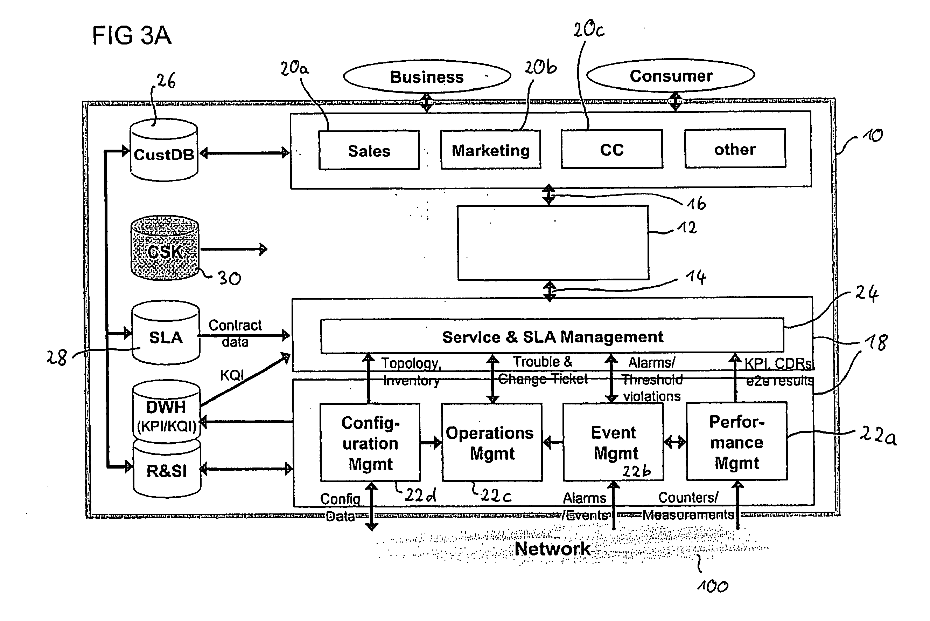

**Fig. 3A** demonstrates a schematic of an exemplary system according to one aspect of the present invention. The system 10 comprises a mapping engine 12 having an input queue 14 and an output queue 16. Via the input queue 14 the mapping engine . 12 receives input data from a trigger interface 18. Among the other parameters the input data may comprise key quality parameters (KQI) (key quality indicators) received from the trigger interface 18. After performing a mapping process as described in more detail below, the mapping engine 12 outputs a resulting signal through the output queue 16 to a plurality of responsibility department interfaces 20a, 20b, 20c etc. which may be allocated to different services or departments. A first responsibility department interface 20a may be responsible for sales, a second responsibility department interface 20b may be responsible for marketing etc.

The system 10 further comprises a plurality of management modules 22a, 22b, 22c, and 22d. In this example a performance management module 22a performs automated detection and/or measurements and/or counting of specific network characteristics of the network 100. In particular, the performance management module may automatically measure at least one of the following: an available bandwidth, a response time of individual network components, an availability of certain information, an error rate during transmission of data, etc. Alternatively or additionally the performance management module may receive manual input data characterizing certain conditions of the network 100. Based on the received network characteristics the performance management module 22a sends trigger data do a parameter combination module 24 provided as part of the trigger interface 18.

Similar to the performance management module 22a an event management module 22b may receive signals such as alarms and/or events from the network 100 and transmits respective trigger data to the parameter combination module 24. A configuration management module 22d may, for example, receive configuration data from the network 100 and transmits respective trigger data to the parameter combination module 24.

As shown in **Fig. 3A,** the system 10 further comprises a customer database 26 defining details about a plurality of end customers. Exemplarily, the customer database 26 is directly or indirectly linked to a service level agreement database 28. In one example, the service level agreement database 28 stores a plurality of detailed information about contract data including service level agreements with particular customers or customer segments, e.g. groups of customer having similar interests. The service level agreement data stored in the service level agreement database 28 may particularly define a plurality of agreed customer quality parameters and/or a plurality of agreed service quality parameters and/or a plurality of agreed key quality parameters and/or a plurality of agreed network performance characteristics in a customer of user specific way and/or depending on the specific service level.

Furthermore, the system 10 comprises a mapping model database 30 storing a plurality of model instances as will be described in more detail below. Finally, the system 10 may also comprise further databases for resource and service inventory and/or for data warehouse to define a correlation between trigger data and key quality indicators. A correlation between trigger data and key quality indicators may be stored by means of a normalized grading scheme. The normalized grading scheme may represent a scheme which assigns to at least one of the received trigger signals a real number and/or an analog or digital signal, for example, which makes the trigger signals comparable to each other. The normalized grading scheme may be implemented as an adapter correlation function defining a correlation between at least one received trigger signal and at least one key quality parameter. The additional databases are, for example, connected to the trigger interface 18.

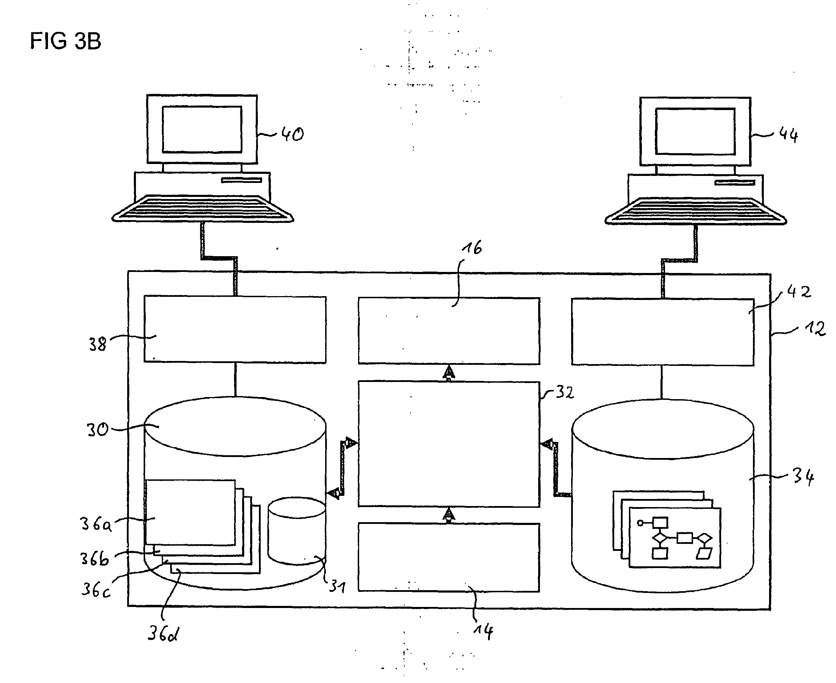

**Fig. 3B** the shows the mapping engine 12 as may be applied in a system according to the example shown in **Fig. 3A.** In this example the mapping engine 12 may comprise the input queue 14 for managing the input from the trigger interface 18 to an execution engine 32. Through the input queue 14 the mapping engine 12 particularly receipts key quality parameters for being processed in the execution engine 32. The mapping engine 12 further comprises the output queue 16 for managing, queuing and/or routing the output, in particular signals and quality status actions to be sent to the responsibility department interfaces. The execution engine 32 communicates with the mapping module database 30 on the one hand and with a rule repository 34, on the other hand. The mapping model database 30, for example, stores a plurality of model instances 36a, 36b, 36,c, 36d each defining one or more correlation functions for at least one service instance as described in more detail below. The mapping model database 30 communicates with a model editor interface 38 via which a model editor 40 may be connected to the mapping engine 12 for adding and/or modifying model instances.

The mapping model database 30 further comprises a persistence database 31 for analyzing the performance of the network 100 and, in particular, for analyzing the service quality over time.

The rule repository 34 may store a responsibility matrix for determining a responsibility of individual responsibility departments for particular components and parameters of the network performance. The rule repository 34 communicates via a rule editor interface 42 with a rule editor 44.

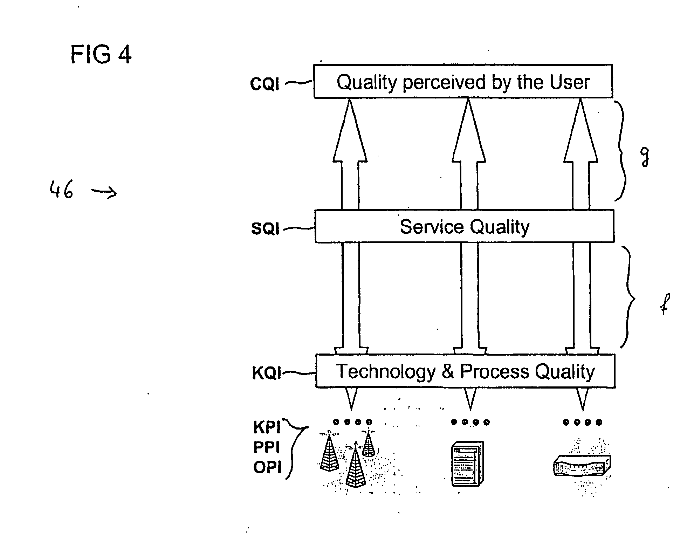

The functionality of the execution engine 32 and the processes carried out by a system 10 according to example of the present invention is described in connection with the following figures in more detail. **Fig. 4** shows a schematic of a service quality mapping module 46 which the execution engine 32 may apply in order to obtain a set of customer quality parameters CQI based on a received set of key quantity parameters KQI. The service quality mapping module 46 comprises various parameter levels. A lower parameter level is formed by the set of key quantity parameters KQI. An intermediate parameter level is formed by a set of service quality parameters SQI and a higher parameter level is formed by the set of customer quality parameters CQI. Individual parameters between neighboring parameter levels are correlated via correlation functions. In particular, the individual service quality parameters $SQI_k$ are related to individual key quality parameters $KQI_j$ via a first correlation function $SQI_k = f_k(KQI_{j=1,...})$. Furthermore, the individual customer quality parameters $CQI_i$ are related to individual service quality parameters $SQI_k$ via a second correlation function $CQI_k = g_i(SQI_{k=1,...})$.

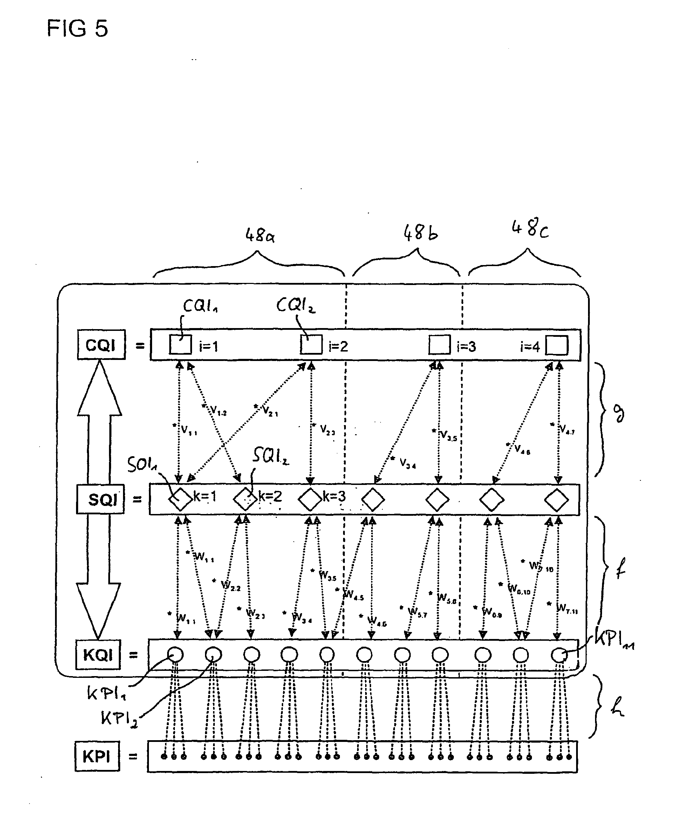

**Fig. 5** shows a service quality mapping module according to a further example of the present invention. In this embodiment the first and second correlation functions f, g particularly define a linear correlation between individual quality parameters. Accordingly, the correlations are defined by a linkage between parameters of neighbouring parameter levels and a weighting factor. The customer quality parameter $CQI_1$, for example, is linked to the service quality parameters $SQI_1$ and $SQI_2$ via the weighting factors $V_{1,1}$ and $V_{1,2}$, respectively. This means that the customer quality parameter $CQI_1$ is exemplarily obtained from the set of service quality parameters by applying the equation

$$CQI_1 = v_{1,1} * SQI_1 + v_{1,2} * SQI_2 .$$

Moreover, the service quality parameter $SQI_1$ is linked to the key quality parameters $KQI_1$ and $KQI_2$ via the weighting factors $W_{1,1}$ and $W_{1,2}$, respectively. Accordingly, the service quality parameter $SQI_1$ is exemplarily obtained from the set of key quality parameters $KQI_j$ by applying the equation

$$SQI_1 = w_{1,1} * KQI_1 + w_{1,2} * KQI_2 .$$

The weighing factors may be customized and adapted to a particular service instance via the model editor 40 and they are exemplarily stored in the model database 30 as components of the model instances.

As further shown in **Fig. 5,** the set of key quality parameters KQI may be obtained from a plurality of trigger signals $KPI_1$, $KPI_2$, etc. In particular, the set of key quality parameters KQI may be obtained from the trigger signals $KPI_l$ by applying a third correlation function h. In one example, the third correlation function h represents the normalized grading scheme as mentioned above, which is exemplarily applied to the plurality of trigger signals $KPI_l$ by means of an adapter tool kit being comprised in the trigger interface 18 according to one example of the present invention. At least, some of the adapters comprised in the adapter tool kit may be comprised in the parameter combination module 24 of the system 10 as shown in **Fig. 3A,** for example. In one example, the normalized grading scheme represents a scheme which assigns a numerical value, in particular a key quality parameter, and/or an analog or digital signal (which may also be referred to al key quality parameters) to each of the plurality of received input information and/or physical conditions represented by the trigger signals depending on the individual adapter component. Since the trigger signal exemplarily represent signals of different types and scaling, it may be advantageous in one example of the invention to apply adequate adapter components for a normalized grading of the trigger signals such that the resulting key quality parameters can be processed on a exemplarily normalized scale (i.e. the scales are adapted to each other to be comparable) for the further mapping in the mapping engine 12. In one example, the trigger signals may comprise at least one key performance indicator (KPI) and/or at least one process performance indicator (PPI) and/or at least one operational performance indicator (OPI).

As further indicated in Fig. 5, the first, second and third parameter level, i.e. the set of key quality parameters KQI, the set of service quality parameters SQI, and the set of customer quality parameters CQI are structured such that they are divided into a plurality of responsibility pools. A responsibility pool exemplarily defines a group of parameters for which a particular department of a service provider may be responsible. Accordingly, in one example one or more of the responsibility pool are related to a respective responsibility department interface 20a, 20b, 20c as shown in Fig. 3A. In particular, three responsibility pools 48a, 48b, and 48c are shown in Fig. 5, where each responsibility pool extends over all three parameter levels, i.e. the set of key quality parameters, the set of service quality parameters, and the set of customer quality parameters. In the shown example, each of these responsibility pools 48a, 48b, 48c comprises at least one quality parameter within each of the three parameter levels. Exemplarily, each of the responsibility pools may be assigned to at least one responsibility department interface 20 as shown in **Fig. 3A.**

In a exemplary method according to the present invention, for each quality parameter a responsibility set may be determined. Referring to the customer quality parameter $CQI_3$, for example, first of all, a correlation set defining quality parameters that are downwardly correlated with said customer quality parameter is determined. When analyzing the correlations indicated in the exemplary service quality mapping module shown in Fig. 5, it can be seen that this correlation set comprises the following parameters: $CQI_3$, $SQI_4$, $SQI_5$, $KQI_5$, $KQI_6$, $KQI_7$, $KQI_8$. In the next step, a responsibility set is determined by searching for all responsibility pools containing at least one parameter from the correlations set. In the shown example the responsibility set, therefore, comprises the first responsibility pool 48a and the second responsibility pool 48b. Accordingly, departments or services responsible for these responsibility pools may be informed via the respective responsibility department interface about a status of the customer quality parameter $CQI_3$ and in particular about any deviation of this customer quality parameter CQI from respective service level agreement date to stored in the service level agreement database 28.

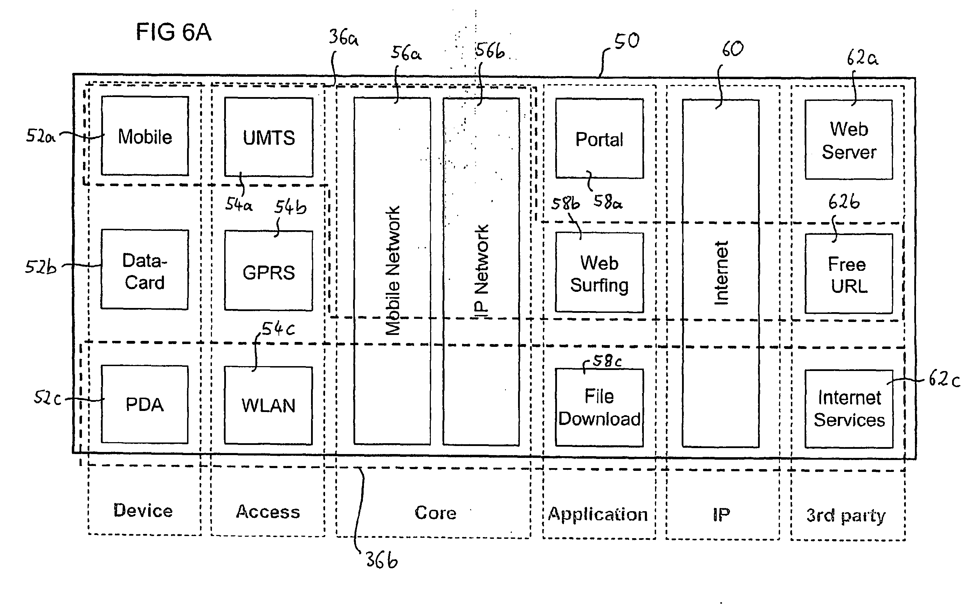

**Fig. 6A** shows a schematic example of an end customer service 50 delivered by a network similar to a network 100 as shown in Fig. 2. This network also comprises a plurality of network components. In particular, the end customer service 50 involves three different end user devices, namely a mobile phone 52a, a data card 52b, and a PDA 52c. The shown end customer service 50 further comprises various access components such as a UMTS network 54a, a GPRS network 54b, and a WLAN network 54c. Moreover, the end customer service 50 comprises two different core networks, namely a mobile network 56a and an IP network 56b. Even further, various types of application components are comprised in the end customer service 50, namely a portal 58a, Web surfing 58b and file download 58c. Moreover, the end customer service 50 comprises Internet 60 as a further network component. Finally, in the shown example the end customer service 50 comprises as third-party network components a web server 62a free URL 62b and Internet services 62c.

An end customer service may comprise one or more closed chains of network components, i.e. one or more service instances. Exemplarily, separate applications and/or separate task offered within an end customer service may be represented by separate service instances within the end customer service. In another example which is not explicitly shown in the figures, a service instance may be identical to the end customer service, i.e. an end customer service is not divided into different service instances. In this embodiment each service instance may represent a complete end customer service.

In the shown example of Fig. 6A, the end customer service 50 is structured in to two closed chains of network components, each representing a particular service instance delivered to the end customer. The first service instance 36a delivers to the end customer the service of surfing in the Internet via the mobile phone 52a. Therefore, all of network components incorporated in this task are comprised in the first service instance 36a, namely the mobile phone 52a, the UMTS network 54a, the mobile network 56a, the IP network 56b, web surfing 58b, Internet 60, and free URL 62b.

The second service instance 36b delivers to the end customer the access to the Internet via a PDA, and in particular the service of surfing and downloading files from the Internet by means of a PDA. Accordingly, the network components required for this task are comprised in the second service instance 36b. Grouping the complete end-to-end customer service into individual service instances results in a high flexibility of a method and a system according to one example of the present invention.

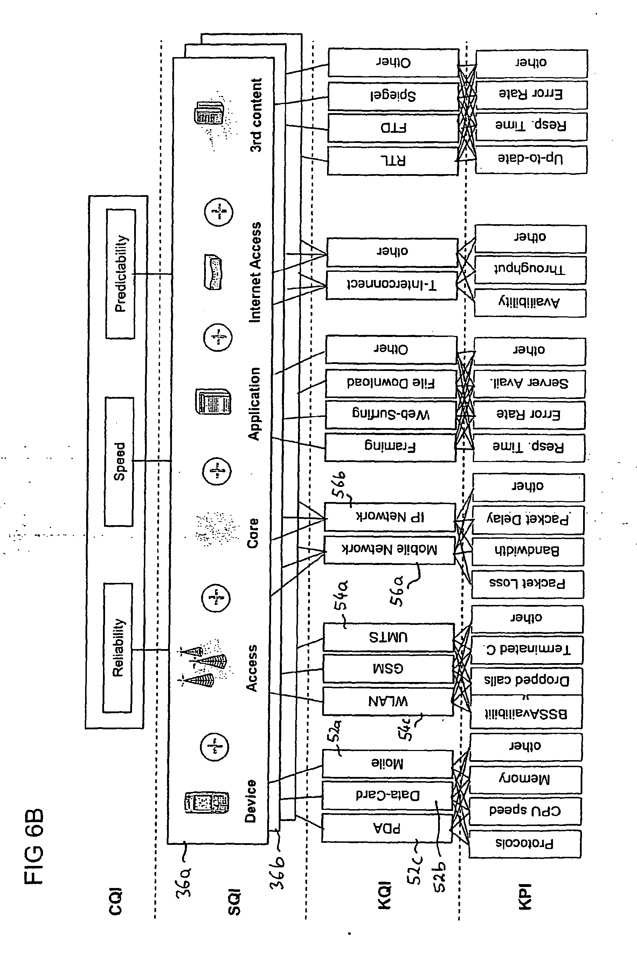

**Fig. 6B** shows a schematic of a service quality mapping module 46 for the network and the service instances of Fig. 6A. The key quality parameters KQI represent characteristic parameters for the individual network components of the end customer service 50 described in connection with Fig. 6A, above. The key quantity parameters KQI may comprise parameters representing one of device reliability, GPRS/GSM availability, GPRS/GSM performance, UMTS availability, UMTS performance, framing server availability, framing server performance, etc. The service quality parameters SQI represent characteristics of the individual service instances 36a, 36b. The service quality parameters SQI may comprise parameters representing device reliability, access availability, head end server availability, etc. The customer quality parameters CQI are exemplary represented by the three parameters "reliability", "speed", and "predictability". Further parameters representing "satisfaction" and/or "efficiency" may be comprised in the set of customer quality parameters CQI. In one example, for each service instance separate correlation functions may be defined. For example, a first instance quality mapping module may be defined for the first service instance 36a, while a second instance quality mapping module may be defined for the second service instance 36b of the end customer service 50. In another example, the service quality parameters for all service instances together with the respective correlation functions may be combined at least within one end customer service 50, i.e. one service quality mapping module may be defined for the end customer service 50.

In summary, in one aspect the invention provides a method of establishing a model comprising one or more of the steps: identifying at least one customer quality indicator (CQI); identifying at least a first provider quality indicator; and/or determining at least one first correlation factor between the at least one provider quality indicator and the at least one customer quality indicator. Exemplarily, the custom quality indicator defines at least one particular aspect of a user perceived quality of service. The provider quality indicator exemplarily defines at least one particular aspect of a quality of provided service. Exemplarily, the at least one provider quality indicator comprises at least one service quality indicator (SQI) and/or at least one key quality indicator (KQI).

In one aspect the invention provide a method of establishing a model comprising one or more of the steps: identifying at least one customer quality indicator (CQI); identifying at least one service quality indicator (SQI); identifying at least one key quality indicator (KQI); determining at least one first correlation factor between the at least one service quality indicator and the at least one customer quality indicator; and/or determining at least one second correlation factor between the at least one key quality indicator and the least one service quality indicator. Exemplarily, the method further comprises a step of determining at least one third correlation factor between the at least one key quality indicator and the least one customer quality indicator Exemplarily, the customer quality indicator(s) (CQI) describes and/or defines a service quality perceived by the customer. The service quality indicator exemplarily defines at least one particular aspect of a quality of provided service. Exemplarily, the service quality indicator (SQI) describes and/or defines a quality of a service and/or services offered by the operator. The key quality indicator (KQI) exemplarily describes and/or defines a quality and/or performance of technological components and/or component chain and/or processes. Exemplarily, the customer quality indicators and/or parameters contain an aggregation of a plurality of perception factors. The service quality indicators and/or parameters are exemplarily composed of service components. Exemplarily, the key quality indicator(s) comprise(s) key performance indicators (KPIs) and/or process performance indicators (PPIs) and/or operational performance indicators (OPIs).

Exemplarily, the customer quality indicator(s) comprise(s) an indicator for satisfaction; and/or an indicator for reliability; and/or an indicator for efficiency; and/or an indicator for predictability; and/or an indicator for speed. The service quality indicator(s) exemplarily comprise(s): an indicator for web-surfing; and/or an indicator for E-mail retrieval; and/or an indicator for file download, in particular for large file download; and/or an indicator for video streaming; and/or an indicator for device; and/or an indicator for access; and/or an indicator for core; and/or an indicator for application; and/or an indicator for internet access; and/or an indicator for 3rd content. In one example, the key quality indicator(s) comprise(s): an indicator for packet loss; and/or an indicator for bandwidth; and/or an indicator for packet delay; and/or an indicator for jitter. Exemplarily, each of the correlation factors comprise a relationship and a weighting factor. Exemplarily, the key quality indicator(s) is/are related to PDA and/or data-card and/or mobile and/or WLAN and/or GSM and/or UMTS and/or mobile network and/or IP network and/or framing and/or web-surfing and/or file download and/or T-Interconnect and/or third party content such as television broadcast like RTL, for example, and/or newspapers and/or magazines like Spiegel, for example. The key performance indicator(s) exemplarily is/are related to protocols and/or CPU speed and/or memory and/or BSSAvailability and/or dropped calls and/or terminated calls and/or packet loss and/or packet delay and/or response time and/or error rate and/or server availability and/or availability of internet access and/or throughput and/or up-to-date.

Exemplarily, a method of customizing a CSK model is provided that comprises a step of identifying at least one representative user group; and/or a step of designing and/or building quality of service testing infrastructure; and/or a step of conducting user group survey; and/or a step of deriving weighting factors; and/or a step of adapting quality of service parameters and relations. Exemplarily, identifying at least one representative user group comprises analyzing a customer database with respect to at least one particular service. Exemplarily, deriving weighting factors comprises determining at least one correlation factor between at least one service quality indicator and at least one customer quality indicator; and/or at least one correlation factor between at least one key quality indicator and at least one service quality indicator; and/or at least one correlation factor between at least one key quality indicator and at least one customer quality indicator.

In one aspect the invention provides a method of monitoring comprising the steps of receiving an input of at least one environmental parameter and/or at least one trigger and/or stored data; and outputting a signal defining at least one action and/or at least one service quality status. In one example, the environmental parameter comprises a time and/or a date and/or a location and/or a day-of-week and/or an event and/or incidents. The trigger exemplarily comprises a trouble ticket and/or a threshold and/or an alarm and/or a KPI. Exemplarily, the stored data comprise customer data and/or SLA management data and/or resource data and/or service inventory data. Exemplarily, the information defining an action are directed to CRM and/or account manager and/or info management and/or problem management and/or field force and/or notification and/or reporting. The service quality status exemplarily comprises and/or is related to a customer quality indicator.

In one aspect the invention provides a method of end-to-end organizational modelling that comprises a step of introducing a logical organizational layer representing the role of end-to-end service management, which exemplarily is clearly separated from network management; and/or a step of implementing an end-to-end responsibility matrix with defined decision rights; and/or a step of defining and/or adjusting OLAs between service management and other departments contributing to service management; and/or a step of defining and/or communication goals and/or tasks and/or responsibilities for service management within the organization; and/or a step of adapting a company target-system to reflect a common service quality view.

In another aspect the invention provides a method establishing a relationship between a quality as perceived by a user and underlying technology and/or process parameters, the method comprising a step of modelling as described above; and/or a step of customizing as described above; and/or a step of monitoring as described above. Exemplarily, the method further comprises a step of modelling end-to-end service; and/or a step of monitoring end-to-end service; and/or a step of modelling end-to-end organisation as described above; and/or a step of customizing end-to-end organisation.

In another aspect the invention provides a computer system capable of performing operations according to a method as described above. The computer system exemplarily comprises a CSK engine, which is, for example, capable of performing monitoring as described above. In another aspect the invention provides a computer program product comprising program code, which when loaded in a computer system causes the system to perform steps according to a method as described above.

In another aspect the invention provides a CSK model that comprises a first layer defining at least one customer quality indicator; and/or a second layer defining at least one provider quality indicator; and/or at least one correlation factor and/or weighting factor defining a relation between the at least one provider quality indicator and the at least one customer quality indicator. In a further aspect the invention provides a CSK model that comprises a first layer defining at least one customer quality indicator (CQI); and/or a second layer defining at least one service quality indicator (SQI); and/or a third layer defining at least one key quality indicator (KQI); and/or at least one S-C correlation factor and/or weighting factor defining a relation between the at least one service quality indicator and the at least one customer quality indicator; and/or at least one K-S correlation factor and/or weighting factor defining a relation between the at least one key quality indicator and the at least one service quality indicator; and/or at least one K-C correlation factor and/or weighting factor defining a relation between the at least one key quality indicator and the at least one customer quality indicator. In another aspect the invention provides a CSK model that comprises a first layer defining a plurality of customer quality indicator (CQI); a second layer defining a plurality of service quality indicator (SQI); a third layer defining a plurality of key quality indicator (KQI); and a plurality of S-C correlation factors and/or weighting factors, each defining a relation between at least one service quality indicator and at least one customer quality indicator; and/or a plurality of K-S correlation factors and/or weighting factors, each defining a relation between at least one key quality indicator and at least one service quality indicator; and/or a plurality of K-C correlation factors and/or weighting factors, each defining a relation between at least one key quality indicator and at least one customer quality indicator.

Exemplarily, the model further comprises a plurality of customer segments, wherein each customer segment comprises at least one customer quality indicator and/or at least one service quality indicator and/or key quality indicator, wherein the plurality of customer segments exemplarily comprises technology and/or customer care and/or sales.

In one aspect the invention provides an end-to-end service model that comprises a technical view; and/or a process view; and/or a performance view. Exemplarily, the technical view comprises a device layer and/or an access layer and/or a transport layer and/or a control layer and/or an application layer and/or key performance indicators. The process view exemplarily comprises a customer related touchpoint for sales and/or a customer related touchpoint for marketing and/or a customer related touchpoint for CC and/or a customer related touchpoint for operations and/or process performance indicators. The performance view exemplarily comprises a monitoring of a plurality of technical recources and/or processes related to an end-to-end circuit; and/or a behaviour of single service components and/or end-to-end circuits.

The invention can be implemented in digital electronic circuitry, or in computer hardware, firmware, software, or in combinations of them. The invention can be implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network. Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic; magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks such as internal hard disks and removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device such as a CRT (cathode ray tube) or LCD (liquid crystal display) monitor for displaying information to the user and a keyboard and a pointing device such as a mouse or a trackball by which the user can provide input to the computer. Other kinds of devices can be used to provide for interaction with a user as well; for example, feedback provided to the user can be any form of sensory feedback, such as visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or an Web browser through which a user can interact with an implementation of the invention, or any combination of such back-end, middleware, or front-end components. The components of the system can be interconnected by any form or medium of digital data communication, e.g., a communication network. Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

In one aspect present invention provides a system and a method for supporting management of service quality that exemplarily provides and operates network specific metrics and correlate them with customer specific metrics.

A Customer-Service-Key (CSK) Service Quality Framework generally refers to a relationship between the quality as perceived by the user and underlying network parameters. The relationship between the customer and/or services and/or technology and/or processes is exemplarily modelled in a CSK model (Customer/Service/Key quality indicator model). The CSK model may then be customized through the determination of customer related weighting factors and may be applied to end-to-end services circuits reflecting the technical delivery mechanism.

A CSK monitoring engine particularly monitors predefined quality indicators, such as key quality indicators (KQIs) and/or key performance indicators (KPIs) exemplarily covering network related performance and quality metrics, and/or calculates customer centric service quality (CCSQ) exemplarily using the CSK model and/or the weighting factors. The resulting CCSQ data describes the service quality perceived by the customer.

CSK monitoring may provide telecommunication companies and/or internet providers with relevant data for analyzing the service quality that is actually delivered to the customer. This permits the management to direct the investments at the right place and to fine tune their operations to improve or maximize the delivered service quality of investments.

In one aspect, the invention relates to two major parts:

- CSK Model and customization parameters and/or
- CSK Monitoring Engine

The basic guiding principles of client centric service quality management comprise

- understanding the value of the customer; and/or
- aligning services to customer centric view; and/or mapping process and/or technology to services; and/or
- converging offered perceived quality.

Up until now only key performance indicators (KPI$_s$) are measured and analysed. The available solutions successfully monitor these parameters. They fail however to create the link between the measureable KPIs (technology oriented) and the qualilty perceived by the customer (customer viewpoint).

In one aspect, the invention relates to a method comprising a step of understanding the value of the customer; and/or a step of aligning services to customer centric view; and/or a step of mapping processes and/or technology to services; and/or a step of converging offered and perceived quality.

In another aspect the present invention is related to a method comprising

- a step of modelling of the relationships between the customer, services and technology and processes (CSK Model); and/or
- a step of customization of the CSK model through the determination of customer related weighting factors w; and/or
- a step of monitoring of business logic (CSK relationships & weighting factors w) within the framework of the interfacing business processes & systems.

In another aspect the present invention is related to a method of service organization comprising:

- a step of defining and/or implementing of an end-to-end responsibility matrix with defined decision rights along the defined service models; and/or
- a step of implementing a logical organizational layer representing the role of end-to-end service managers; and/or
- a step of defining and/or implementing of end-to-end processes and/or intefaces (Operational Level Agreements, OLAs) for service quality management.

In yet another aspect the present invention is related to modelling of services to end-to-end circuits reflecting the technical delivery mechanism (Basis for the CSK model), and/or monitoring of services on the basis of predefined quality indicators (KQIs) and KPIs covering network related performance and quality metrics.

In another aspect the invention provides a method of establishing a model which exemplarily defines a relationship between the quality as received by a user and the underlying technology and/or process parameters. The model exemplarily comprises a customer quality indicator and/or a service quality indicator and/or a key quality indicator. Each of the quality indicators comprised in the model exemplarily comprises one or more, exemplarily a plurality of indication parameters. The customer quality indicator exemplarily comprises a satisfaction parameter and/or a reliability parameter and/or an efficiency parameter and/or a predictability parameter. The service quality indicator exemplarily comprises a web-surfing parameter and/or an E-mail retrieval parameter and/or a file download parameter and/or a video streaming parameter. The key quality indicator exemplarily comprises a packet loss parameter and/or a band width parameter and/or a packet delay parameter and/or a jitter parameter. The model may further comprise a key performance indicator (KPI) and/or a process performance indicator (PPI) and/or an operational performance indicator (OPI).

The parameters of the quality indicators exemplarily cover a plurality of functional domains such as technology, customer care, sales, etc. When establishing the model exemplarily at least one customer quality parameter of the customer quality indicator and at least one additional parameter of one of the service quality indicator and the key quality indicator is identified. Further, at least one correlation factor w defining a correlation between the at least one customer quality parameter and the at least one additional parameter is determined. In one example, the model comprises a plurality of customer quality parameters, a plurality of service quality parameters and a plurality of key quality parameters and a method exemplarily comprises determining a plurality of customer/service quality correlation factors (exemplarily functioning as weighting factors v, w) and/or a plurality of service/key quality correlation factors (exemplarily functioning as weighting factors v, w). Each customer/service quality correlation factor defines a correlation between one customer quality parameter and one service quality parameter while each of the service/key quality correlation factors defines a correlation between one service quality parameter and one key quality parameter. The correlation factors may define correlation between parameters within the same functional domain and/or between parameters of different functional domains. The model exemplarily covers all services and/or affected customer segments (e.g. functional domains).

In a further aspect the present invention relates to a method of customisation of a CSK model. The customisation exemplarily determines what the customer receives as quality and shows what key quality parameters are required for the customer quality indicators. The method of customisation exemplarily comprises a step of identifying representative use groups and/or a step of designing and/or building quality of service testing infrastructure and/or a step of conduction user group survey and/or a step of deriving weighting factors and/or a step of adapting quality of service parameters and/or relations. The representative user groups may be identified on the basis of a customer database and each of the user group maybe a representative for certain services. The different user groups may comprise corporate, retail, and/or youth, for example. Designing and/or building a quality of service testing infrastructure may comprise providing devices, such as mobile phones, and/or network access points (RAN), and/or a framing server, and/or core network, and/or an internet access point, and/or an internet domain. The weighting factors as exemplarily comprised in a method of customisation of the CSK model exemplarily define the correlation factors between quality parameters in a model as defined above. In one step according to an exemplary method of customisation, the quality of service parameters and/or the relations between these parameters are adapted exemplarily starting from a model as described above, where the quality of service parameters represent customer quality parameters and/or services quality parameters and/or key quality parameters.

In a further aspect, the present invention provides CSK monitoring. A CSK engine which exemplarily performs the CSK monitoring and which exemplarily comprises CSK model instances receives input from at least one of environmental parameters and/or triggers and/or stored data, and provides at least one output defining a service quality status and/or a trigger to at least one other system and/or process for further action based on the service status. The environmental parameters may comprise time and/or date and/or location and/or day-of-weak and/or events and/or incidents. The triggers may comprise trouble ticket and/or threshold and/or alarm and/or key performance indicators (KPI). The stored data may comprise customer data and or service level agreement (SLA) management data and/or resource data and/or service inventory data. The outputted trigger may be directed towards CRM and/or account manager and/or information management and/or problem management and/or field force and/or notification and/or reporting. The service quality status may comprise a customer quality indicator (CQI).

The CSK monitoring execution engine (CSK engine) exemplarily interacts with a CSK model repository and/or CSK rules repository. The CSK model repository may store the instances of CSK model and/or provide persistence for the analysis over time of service quality. The CSK rules repository exemplarily stores the business rules for use by the CSK monitoring execution engine. In one example, the CSK monitoring execution engine receives an input queue and/or is triggered by the input queue, where the input queue may manage the input to the execution engine and/or manage I/O to external data sources and/or associate data with CSK instances. The CSK monitoring execution engine exemplarily provides an output queue which manages (exemplarily by queuing and/or rooting) the output generated by the CSK monitoring Execution Engine. In a further example the CSK monitoring execution engine is capable of executing rules against specific CSK models to analyse quality and/or importing environmental and/or stored data as required (rules).

In one example, the CSK model repository communicates with a CSK model editor which is exemplarily capable of

- creating new CSK models as part of the service creation and/or customising process; and/or
- editing and/or updating the CSK model weightings; and/or
- importing CSK models in XML format from other sources such as service activation: The CSK model editor may comprise an application and/or a graphical user interface.

The CSK rules repository may communicate with a CSK business rules editor which is exemplarily capable of

- creating and/or editing CSK rules for CSK model processing; and/or
- testing existing and new rules.

A number of embodiments have been described. Nevertheless, it will be understood that various modifications may be made without departing from the spirit and scope of the invention. Accordingly, other embodiments are within the scope of the following claims.

REFERENCE NUMERALS

| | |
|---|---|
| 10 | system |
| 12 | mapping engine |
| 14 | input queue |
| 16 | output queue |
| 18 | trigger interface |
| 20a, 20b, 20c, 20d | responsibility department interfaces |
| 22a | performance management module |
| 22b | event management module |
| 22c | operations management module |
| 22d | configuration management module |
| 24 | parameter combination module |
| 26 | customer database |
| 28 | service level agreement database |

| 30 | mapping module database, mapping module repository |
| 32 | execution engine |
| 34 | rule repository |
| 36a, 36b, 36c, 36d | model instances, service instances |
| 38 | model editor interface |
| 40 | model editor |
| 42 | rule editor interface |
| 44 | rule editor |
| 46 | service quality mapping module |
| 48a, 48b, 48c | responsibility pools |
| 50 | end customer service |
| 52a | mobile phone |
| 52b | data card |
| 52c | PDA (personal digital assistant) |
| 54a | UMTS |
| 54b | GPRS |
| 54c | WLAN |
| 56a | Mobile Network |
| 56b | IP Network |
| 58a | Portal |
| 58b | Web Surfing |
| 58c | File Download |
| 60 | Internet |
| 62a | Web Server |
| 62b | free URL |
| 62c | Internet Services |

| 100 | network |
| 102 | first end customer device |
| 104 | second end customer device |
| 106 | access network |
| 108 | core network |
| 110 | WAP gateway |
| 112 | SMS server |
| 114 | WAP portal |
| 116 | Internet Portal |
| 118 | 3rd party download server |

| KQI | set of key quality parameters |
| SQI | set of service quality parameters |
| CQI | set of customer quality parameters |

**Claims**

**1.** A computer-implemented method of controlling a performance of a network (100), where the network (100) comprises a plurality of network components and delivers an end customer service (50), the method comprising the steps of:

- receiving a set of key quality parameters (KQI), wherein each key quality parameter ($KQI_j$) represents a characteristic of at least one network component;
- providing a service quality mapping module (46) defining, depending on the network components involved in the delivered end customer service (50),

-- a set of service quality parameters (SQI) comprising at least one service quality parameter ($SQI_k$) for each network component involved in the delivered end customer service (50);
-- a first correlation function (f) defining a correlation between the set of key quality parameters (KQI) and the set of service quality parameters (SQI); and
-- a second correlation function (g) defining a correlation between the set of service quality parameters

17

(SQI) and a set of customer quality parameters (CQI),

wherein the set of key quality parameters and the set of service quality parameters and the set of customer quality parameters are structured into a plurality of responsibility pools (48a, 48b, 48c), whereby a responsibility pool defines a group of parameters for which a particular department of a service provider may be responsible, such that each key quality parameter and each service quality parameter and each customer quality parameter belongs to at least one responsibility pool (48a, 48b, 48c);- retrieving service level agreement data from an end customer database, where the service level agreement data comprise at least one predetermined key quality parameter and/or at least one predetermined service quality parameter and/or at least one predetermined customer quality parameter;

- applying the first correlation function (f) to the received set of key quality parameters (KOI) to obtain the set of service quality parameters (SQI);
- applying the second correlation function (g) to the obtained set of service quality parameters (SQI) to obtain the set of customer quality parameters (CQI);
- determining a deviation of the received key quality parameters (KQI) and/or the obtained service quality parameters (SQI) and/or the obtained customer quality parameters (CQI) from the respective predetermined parameter of the service level agreement data;
- determining for at least one determined deviation from the service level agreement data a deviation correlation set defining all parameters that are upwardly and/or downwardly correlated with the deviating parameter via the first correlation function (f) and/or the second correlation function (g);
- determining for the at least one determined deviation a deviation responsibility set defining all responsibility pools (48a, 48b, 48c) containing at least one parameter from the deviation correlation set of the respective deviating parameter; and
- outputting a signal representing at least one customer quality parameter ($CQI_i$), wherein outputting a signal comprises sending a notification about the determined deviation to responsible departments depending on the determined deviation responsibility set.

2. Method of claim 1, wherein the service quality mapping function (46) defines for each customer quality parameter ($COI_i$) a linear dependency on at least one key quality parameter ($KQI_j$) via a set of service quality weighting factors.

3. Method according to claim 1 or 2, wherein the service quality parameters ($sQI_k$) describes and/or defines a quality of a service and/or services offered by an operator.

4. Method according to claim 1, 2, or 3, wherein the customer quality parameters ($CQI_i$) define at least one particular aspect of a service quality perceived by the end customer.

5. Method of anyone of the preceding claims, wherein the delivered end customer service (50) comprises a plurality of service instances (36a, 36b) delivered to an end customer, and wherein providing a service quality mapping function (46) comprises providing for each service instance (36) an instance quality mapping module which defines

-- a set of service quality parameters comprising at least one service quality parameter for each network component involved in the respective service instance;
-- a first correlation function defining a correlation between the set of key mapping parameters and the set of service quality parameters; and
-- a second correlation function defining a correlation between the set of service parameters and the set of customer quality parameters; and

wherein the step of applying the service quality mapping function to the received set of key quality parameters comprises a step of applying for each service instance the instance quality mapping module to the received set of key quality parameters to obtain for each service instance a separate set of customer quality parameters.

6. Method of anyone of the preceding claims, wherein the first correlation function defines for each service quality parameter a linear dependency on at least one key quality parameter via a set of first correlation weighting factors; and/or wherein the second correlation function defines for each customer quality parameter a linear dependency on at least one service quality parameter via a set of second correlation weighting factors.

7. Method of anyone of the preceding claims, wherein receiving the set of key quality parameters comprises

- receiving a plurality of trigger signals each representing a characteristic of at least one network component;
- transforming the plurality of trigger signals into the set of key quality parameters by applying a normalized grading scheme.

8. Method of anyone of the preceding claims, wherein the set of key quality parameters and the set of service quality parameters and the set of customer quality parameters are structured into a plurality of responsibility pools such that each key quality parameter and each service quality parameter and each customer quality parameter belongs to at least one responsibility pool, and wherein the method comprises the steps of:

- determining for each customer quality parameter within the obtained set of customer quality parameters a parameter correlation set defining all key quality parameters and/or all service quality parameters that are upwardly and/or downwardly correlated with the respective customer quality parameter via the service quality mapping function and/or the first correlation function and/or the second correlation function;
- determining for each customer quality parameter a responsibility set defining all responsibility pools containing at least one parameter from the parameter correlation set of the respective customer quality parameter;

wherein the step of outputting a signal representing at least one customer quality parameter comprises sending said signal to responsible departments depending on the determined responsibility set.

9. Computer program product comprising program code, which when loaded in a computer system causes the system to perform steps according to a method of anyone of the preceding claims.

10. A system (10) for controlling a performance of a network (100), where the network (100) comprises a plurality of network components and delivers an end customer service (50), the system (10) comprising:

- a trigger interface (18) for receiving a set of key quality parameter (KQI), wherein each key quality parameter ($KQI_j$) represents a characteristic of at least one network component;
- a mapping model repository (30) for storing a service quality mapping module (46) defining, depending on the network components involved in the delivered end customer service (50),

-- a set of service quality parameters (SQI) comprising at least one service quality parameter ($SOI_k$) for each network component involved in the delivered end customer service (50);
-- a first correlation function (f) defining a correlation between the set of key quality parameters (KQI) and the set of service quality parameters (SQI); and
-- a second correlation function (g) defining a correlation between the set of service quality parameters (SQI) and a set of customer quality parameters (CQI),
wherein the mapping model repository comprises a plurality of responsibility pools (48a, 48b, 48c), whereby a responsibility pool defines a group of parameters for which a particular department of a service provider may be responsible, such that each key quality parameter and each service quality parameter and each customer quality parameter belongs to at least one responsibility pool (48a, 48b, 48c);

- an end customer database storing service level agreement data, where the service level agreement data comprise at least one predetermined key quality parameter and/or at least one predetermined service quality parameter and/or at least one predetermined customer quality parameter;
- a mapping engine (12) for applying the first correlation function (f) to the received set of key quality parameters (KOI) to obtain the set of service quality parameters (SQI) and for applying the second correlation function (g) to the obtained set of service quality parameters (SQI) to obtain the set of customer quality parameters (CQI);
- a deviation monitor for determining a deviation of the received key quality parameters and/or the obtained service quality parameters and/or the obtained customer quality parameters from the respective predetermined parameter of the service level agreement data,
- a deviation correlator for determining for at least one determined deviation from the service agreement data a deviation correlation set defining all parameters that are upwardly and/or downwardly correlated with the deviating parameter via the first correlation function (f) and/or the second correlation function (g);
- a deviation responsibility evaluation unit for determining for the at least one deviation a deviation responsibility set defining all responsibility pools (48a, 48b, 48c) containing at least one parameter from the deviation correlation set of the respective deviating parameter; and
- a control interface for outputting a signal representing at least one customer quality parameter ($CQI_i$), wherein the control interface comprises responsibility department interfaces (20a, 20b, 20c, 20d) and is configured to output a notification about the determined deviation via at least one of the responsibility department interfaces (20a, 20b, 20c, 20d) depending on the determined responsibility set.

11. System of claim 10, wherein the delivered end customer service comprises a plurality of service instances delivered to an end customer, and wherein the mapping model repository stores for each service instance an instance quality mapping module which defines

-- a set of service quality parameters comprising at least one service quality parameter for each network component involved in the respective service instance;
-- a first correlation function defining a correlation between the set of key quality parameters and the set of service quality parameters; and
-- a second correlation function defining a correlation between the set of service quality parameters and the set of customer quality parameters; and

wherein the mapping engine is configured to apply for each service instance the instance quality mapping module to the received set of key quality parameters to obtain for each service instance a separate set of customer quality indicators.

12. System of claim 10 or 11, wherein the trigger interface comprises a plurality of adapter components for receiving a plurality of trigger signals each representing a characteristic of at least one network component and where the plurality of adapter components are configured to transform the plurality of trigger signals into the set of key quality parameters by applying a normalized grading scheme.

13. System of anyone of claims 10 to 12, wherein the mapping model repository comprises a plurality of responsibility pools such that each key quality parameter and each service quality parameter and each customer quality parameter belongs to at least one responsibility pool, and wherein the system further comprises

- a correlator for determining for each customer quality parameter within the obtained set of customer quality parameters a parameter correlation set defining all key quality parameters and/or all service quality parameters that are upwardly and/or downwardly correlated with the respective customer quality parameter via the service quality mapping function and/or the first correlation function and/or the second correlation function; and
- a responsibility evaluation unit for determining for each customer quality parameter a responsibility set defining all responsibility pools containing at least one parameter from the parameter correlation set of the respective customer quality parameter; and

wherein the control interface comprises responsibility department interfaces and is configured to send said signal to the responsibility department interfaces depending on the determined responsibility set.

**Patentansprüche**

1. Computerimplementiertes Verfahren zum Steuern bzw. Regeln einer Leistung eines Netzwerks (100), wobei das Netzwerk (100) eine Mehrzahl von Netzwerkkomponenten umfasst und eine Endverbraucherdienstleistung (50) liefert, wobei das Verfahren die Schritte umfasst:

- Empfangen eines Satzes von Hauptqualitätsparametern (KQI), wobei jeder Hauptqualitätsparameter (KQI$_j$) eine Charakteristik von zumindest einer Netzwerkkomponente darstellt;
- Bereitstellen eines Dienstleistungsqualität- Abbildungsmoduls (46), das abhängig von den Netzwerkkomponenten, die in die gelieferte Endverbraucherdienstleistung (50) involviert sind, definiert:

- einen Satz von Dienstleistungsqualitätsparametern (SQI), die zumindest einen Dienstleistungsqualitätsparameter (SQI$_k$) für jede Netzwerkkomponente umfassen, die in die gelieferte Endverbraucherdienstleistung (50) involviert ist;
- eine erste Korrelationsfunktion (f), die eine Korrelation zwischen dem Satz von Hauptqualitätsparametern (KQI) und dem Satz von Dienstleistungsqualitätsparametern (SQI) definiert; und
- eine zweite Korrelationsfunktion (g), die eine Korrelation zwischen dem Satz von Dienstleistungsqualitätsparametern (SQI) und einem Satz von Kundenqualitätsparametern (CQI) definiert,

wobei der Satz von Hauptqualitätsparametern und der Satz von Dienstleistungsqualitätsparametern und der Satz von Kundenqualitätsparametern zu einer Mehrzahl von Verantwortungspools (48a, 48b, 48c) strukturiert sind, wodurch bzw. wobei ein Verantwortungspool eine Gruppe von Parametern definiert, für die eine bestimmte Abteilung eines Dienstleistungsproviders verantwortlich sein kann, so dass jeder Hauptqualitätsparameter und jeder Dienstleistungsqualitätsparameter und jeder Kundenqualitätsparameter zu zumindest einem Verantwortungspool (48a, 48b, 48c) gehört;

- Erlangen von Leistungsvereinbarungsdaten bzw. Service-Level-Agreement-Daten von einer Endkundendatenbank, wobei die Leistungsvereinbarungsdaten zumindest einen vorbestimmten Hauptqualitätsparameter und/oder zumindest einen vorbestimmten Dienstleistungsqualitätsparameter und/oder zumindest einen vorbestimmten Kundenqualitätsparameter umfassen;

- Anwenden der ersten Korrelationsfunktion (f) auf den empfangenen Satz von Hauptqualitätsparametern (KQI), um den Satz von Dienstleistungsqualitätsparametern (SQI) zu erhalten;

- Anwenden der zweiten Korrelationsfunktion (g) auf den erhaltenen Satz von Dienstleistungsqualitätsparametern (SQI), um den Satz von Kundenqualitätsparametern (CQI) zu erhalten;

- Bestimmen einer Abweichung der empfangenen Hauptqualitätsparameter (KQI) und/oder der erhaltenen Dienstleistungsqualitätsparameter (SQI) und/oder der erhaltenen Kundenqualitätsparameter (CQI) von dem jeweiligen vorbestimmten Parameter der Leistungsvereinbarungsdaten;

- Bestimmen, für zumindest eine bestimmte Abweichung von den Leistungsvereinbarungsdaten, einen Abweichungskorrelationssatz, der alle Paremeter definiert, die nach oben und/oder nach unten mit dem abweichenden Parameter korreliert werden, über die erste Korrelationsfunktion (f) und/oder die zweite Korrelationsfunktion (g);

- Bestimmen, für die zumindest eine bestimmte Abweichung, einen Abweichungsverantwortungssatz, der alle Verantwortungspools (48a, 48b, 48c) definiert, die zumindest einen Parameter enthalten, aus dem Abweichungskorrelationssatz des jeweiligen abweichenden Parameters; und

- Ausgeben eines Signals, das zumindest einen Kundenqualitätsparameter (CQI$_i$) darstellt, wobei das Ausgeben eines Signals das Senden einer Benachrichtigung über die bestimmte Abweichung an verantwortliche Abteilungen abhängig von dem bestimmten Abweichungsverantwortungssatz umfasst.

2. Verfahren nach Anspruch 1, wobei die Dienstleistungsqualität-Abbildungsfunktion (46) für jeden Kundenqualitätsparameter (CQI$_i$) eine lineare Abhängigkeit von zumindest einem Hauptqualitätsparameter (KQI$_j$) über einen Satz von Dienstleistungsqualität-Gewichtungsfaktoren definiert.

3. Verfahren nach Anspruch 1 oder 2, wobei die Dienstleistungsqualitätsparameter (SQI$_k$) eine Qualität einer Dienstleistung und/oder von Dienstleistungen beschreiben und/oder definieren, die von einem Betreiber angeboten wird.

4. Verfahren nach Anspruch 1, 2 oder 3, wobei die Kundenqualitätsparameter (CQI$_i$) zumindest einen bestimmten Aspekt einer Dienstleistungsqualität definieren, die bzw. wie sie von dem Endkunden wahrgenommen wird.

5. Verfahren nach einem der vorhergehenden Ansprüche, wobei die gelieferte Endkundendienstleistung (50) eine Mehrzahl von Dienstleistungsinstanzen (36a, 36b) umfasst, die an einen Endkunden geliefert werden, und wobei das Bereitstellen einer Dienstleistungsqualität-Abbildungsfunktion (46) das Bereitstellen, für jede Dienstleistungsinstanz (36), eines Instanzqualität-Abbildungsmoduls umfasst, das definiert:

- einen Satz von Dienstleistungsqualitätsparametern, die zumindest einen Dienstleistungsqualitätsparameter für jede Netzwerkkomponente umfassen, die in die jeweilige Dienstleistungsinstanz involviert ist;

- eine erste Korrelationsfunktion, die eine Korrelation zwischen dem Satz von Hauptabbildungsparametern und dem Satz von Dienstleistungsqualitätsparametern definiert; und

- eine zweite Korrelationsfunktion, die eine Korrelation zwischen dem Satz von Dienstleistungsparametern und dem Satz von Kundenqualitätsparametern definiert; und

- wobei der Schritt des Anwendens der Dienstleistungsqualität-Abbildungsfunktion auf den empfangenen Satz von Hauptqualitätsparametern einen Schritt des Anwendens, für jede Dienstleistungsinstanz, des Instanzqualität-Abbildungsmoduls auf den empfangenen Satz von Hauptqualitätsparametern, um für jede Dienstleistungsinstanz einen separaten Satz von Kundenqualitätsparametern zu erhalten.

6. Verfahren nach einem der vorhergehenden Ansprüche, wobei die erste Korrelationsfunktion für jeden Dienstleistungsqualitätsparameter eine lineare Abhängigkeit von zumindest einem Hauptqualitätsparameter über einen Satz von ersten Korrelationsgewichtungsfaktoren definiert; und/oder wobei die zweite Korrelationsfunktion für jeden Kundenqualitätsparameter eine lineare Abhängigkeit von zumindest einem Dienstleistungsqualitätsparameter über einen Satz von zweiten Korrelationsgewichtungsfaktoren definiert.

7. Verfahren nach einem der vorhergehenden Ansprüche, wobei das Empfangen des Satzes von Hauptqualitätsparametern umfasst:

   - Empfangen einer Mehrzahl von Trigger- bzw. Auslösersignalen, von denen jedes eine Charakteristik von zumindest einer Netzwerkkomponente darstellt;
   - Umwandeln der Mehrzahl von Trigger-Signalen in den Satz von Hauptqualitätsparametern durch Anwendung eines normalisierten bzw. einheitlichen Einteilungs- bzw. Klassifizierungssehemas.

8. Verfahren nach einem der vorhergehenden Ansprüche, wobei der Satz von Hauptqualitätsparametern und der Satz von Dienstleistungsqualitätsparametern und der Satz von Kundenqualitätsparametern zu einer Mehrzahl von Verantwortungspools strukturiert werden, so dass jeder Hauptqualitätsparameter und jeder Dienstleistungsqualitätsparameter und jeder Kundenqualitätsparameter zu zumindest einem Verantwortungspool gehört, und wobei das Verfahren die Schritte umfasst:

   - Bestimmen, für jeden Kundenqualitätsparameter innerhalb des erhaltenen Satzes von Kundenqualitätsparametern, einen Parameterkorrelationssatz, der alle Hauptqualitätsparameter und/oder alle Dienstleistungsqualitätsparameter definiert, die nach oben und/oder nach unten mit dem jeweiligen Kundenqualitätsparameter korreliert werden, über die Dienstleistungsqualität-Abbildungsfunktion und/oder die erste Korrelationsfunktion und/oder die zweite Korrelationsfunktion;
   - Bestimmen, für jeden Kundenqualitätsparameter, einen Verantwortungssatz, der alle Verantwortungspools definiert, die zumindest einen Parameter aus dem Parameterkorrelationssatz des jeweiligen Kundenqualitätsparameters enthalten;

   wobei der Schritt des Ausgebens eines Signals, das zumindest einen Kundenqualitätsparameter darstellt, das Senden des Signals an verantwortliche Abteilungen abhängig von dem bestimmten Verantwortungssatz umfasst.

9. Computerprogrammprodukt mit Programmcode, das, wenn es in ein Computersystem geladen ist, das System veranlasst, Schritte gemäß einem Verfahren nach einem der vorhergehenden Ansprüche auszuführen.

10. System (10) zum Steuern bzw. Regeln einer Leistung eines Netzwerks (100), wobei das Netzwerk (100) eine Mehrzahl von Netzwerkkomponenten umfasst und eine Endverbraucherdienstleistung (50) liefert, wobei das System (10) umfasst:

   - eine Trigger- bzw. Auslöserschnittstelle (18) zum Empfangen eines Satzes von Hauptqualitätsparametern (KQI), wobei jeder Hauptqualitätsparameter (KQI$_j$) eine Charakteristik von zumindest einer Netzwerkkomponente darstellt;
   - ein Abbildungsmodellager bzw. -aufbewahrung zum Speichern eines Dienstleistungsqualität- Abbildungsmoduls (46), das abhängig von den Netzwerkkomponenten, die in die gelieferte Endverbraucherdienstleistung (50) involviert sind, definiert:

      - einen Satz von Dienstleistungsqualitätsparametern (SQI), die zumindest einen Dienstleistungsqualitätsparameter (SQI$_k$) für jede Netzwerkkomponente umfassen, die in die gelieferte Endverbraucherdienstleistung (50) involviert ist;
      - eine erste Korrelationsfunktion (f), die eine Korrelation zwischen dem Satz von Hauptqualitätsparametern (KQI) und dem Satz von Dienstleistungsqualitätsparametern (SQI) definiert; und
      - eine zweite Korrelationsfunktion (g), die eine Korrelation zwischen dem Satz von Dienstleistungsqualitätsparametern (SQI) und einem Satz von Kundenqualitätsparametern (CQI) definiert,

   wobei der Satz von Hauptqualitätsparametern und der Satz von Dienstleistungsqualitätsparametern und der Satz von Kundenqualitätsparametern zu einer Mehrzahl von Verantwortungspools (48a, 48b, 48c) strukturiert sind, wodurch bzw. wobei ein Verantwortungspool eine Gruppe von Parametern definiert, für die eine bestimmte Abteilung eines Dienstleistungsproviders verantwortlich sein kann, so dass jeder Hauptqualitätsparameter und jeder Dienstleistungsqualitätsparameter und jeder Kundenqualitätsparameter zu zumindest einem Verantwortungspool (48a, 48b, 48c) gehört;

      - eine Endkundendatenbank, die Leistungsvereinbarungsdaten bzw. Service-Level-Agreement-Daten von einer Endkundendatenbank, wobei die Leistungsvereinbarungsdaten speichern, wobei die Leistungsvereinbarungsdaten zumindest einen vorbestimmten Hauptqualitätsparameter und/oder zumindest einen vorbestimmten Dienstleistungsqualitätsparameter und/oder zumindest einen vorbestimmten Kundenqualitätsparameter umfassen;

- eine Abbildungs-Engine bzw. -Funktionseinheit (12) zum Anwenden der ersten Korrelationsfunktion (f) auf den empfangenen Satz von Hauptqualitätsparametern (KQI), um den Satz von Dienstleistungsqualitätsparametern (SQI) zu erhalten, und zum Anwenden der zweiten Korrelationsfunktion (g) auf den erhaltenen Satz von Dienstleistungsqualitätsparametern (SQI), um den Satz von Kundenqualitätsparametern (CQI) zu erhalten;

- einen Abweichungsmonitor zum Bestimmen einer Abweichung der empfangenen Hauptqualitätsparameter (KQI) und/oder der erhaltenen Dienstleistungsqualitätsparameter (SQI) und/oder der erhaltenen Kundenqualitätsparameter (CQI) von dem jeweiligen vorbestimmten Parameter der Leistungsvereinbarungsdaten;

- einen Abweichungskorrelator zum Bestimmen, für zumindest eine bestimmte Abweichung von den Leistungsvereinbarungsdaten, einen Abweichungskorrelationssatz, der alle Paremeter definiert, die nach oben und/oder nach unten mit dem abweichenden Parameter korreliert werden, über die erste Korrelationsfunktion (f) und/oder die zweite Korrelationsfunktion (g);

- eine Abweichungsverantwortung-Auswertungseinheit zum Bestimmen, für die zumindest eine Abweichung, einen Abweichungsverantwortungssatz, der alle Verantwortungspools (48a, 48b, 48c) definiert, die zumindest einen Parameter enthalten, aus dem Abweichungskorrelationssatz des jeweiligen abweichenden Parameters; und

- eine Steuerungs- bzw. Regelungsschnittstelle zum Ausgeben eines Signals, das zumindest einen Kundenqualitätsparameter ($CQI_i$) darstellt, wobei die Steuerungs- bzw. Regelungsschnittstelle Verantwortungsabteilungsschnittstellen (20a, 20b, 20c, 20d) umfasst und konfiguriert ist, um eine Benachrichtigung über die bestimmte Abweichung über zumindest eine der Verantwortungsabteilungsschnittstellen (20a, 20b, 20c, 20d) abhängig von dem bestimmten Verantwortungssatz auszugeben.

11. System nach Anspruch 10, wobei die gelieferte Endkundendienstleistung eine Mehrzahl von Dienstleistungsinstanzen umfasst, die an einen Endkunden geliefert werden, und wobei das Abbildungsmodellager bzw. -aufbewahrung für jede Dienstleistungsinstanz ein Instanzqualität-Abbildungsmodul speichert, das definiert:

- einen Satz von Dienstleistungsqualitätsparametern, die zumindest einen Dienstleistungsqualitätsparameter für jede Netzwerkkomponente umfassen, die in die jeweilige Dienstleistungsinstanz involviert ist;

- eine erste Korrelationsfunktion, die eine Korrelation zwischen dem Satz von Hauptabbildungsparametern und dem Satz von Dienstleistungsqualitätsparametern definiert; und

- eine zweite Korrelationsfunktion, die eine Korrelation zwischen dem Satz von Dienstleistungsparametern und dem Satz von Kundenqualitätsparametern definiert; und

- wobei die Abbildungs-Engine konfiguriert ist, um für jede Dienstleistungsinstanz das Instanzqualität-Abbildungsmodul auf den empfangenen Satz von Hauptqualitätsparametern anzuwenden, um für jede Dienstleistungsinstanz einen separaten Satz von Kundenqualitätsparametern zu erhalten.

12. System nach Anspruch 10 oder 11, wobei die Trigger-Schnittstelle eine Mehrzahl von Adapterkomponenten zum Empfangen einer Mehrzahl von Trigger- bzw. Auslösersignalen umfasst, von denen jedes eine Charakteristik von zumindest einer Netzwerkkomponente darstellt, und wobei die Mehrzahl von Adapterkomponenten konfiguriert sind, die Mehrzahl von Trigger-Signalen in den Satz von Hauptqualitätsparametern durch Anwendung eines normalisierten bzw. einheitlichen Einteilungs- bzw. Klassifizierungsschemas umzuwandeln.

13. System nach einem der Ansprüche 10 bis 12, wobei das Abbildungsmodellager bzw. -aufbewahrung eine Mehrzahl von Verantwortungspools umfasst, so dass jeder Hauptqualitätsparameter und jeder Dienstleistungsqualitätsparameter und jeder Kundenqualitätsparameter zu zumindest einem Verantwortungspool gehört, und wobei das System ferner umfasst:

- einen Korrelator zum Bestimmen, für jeden Kundenqualitätsparameter innerhalb des erhaltenen Satzes von Kundenqualitätsparametern, einen Parameterkorrelationssatz, der alle Hauptqualitätsparameter und/oder alle Dienstleistungsqualitätsparameter definiert, die nach oben und/oder nach unten mit dem jeweiligen Kundenqualitätsparameter korreliert werden, über die Dienstleistungsqualität-Abbildungsfunktion und/oder die erste Korrelationsfunktion und/oder die zweite Korrelationsfunktion;

- eine Verantwortungsauswertungseinheit zum Bestimmen, für jeden Kundenqualitätsparameter, einen Verantwortungssatz, der alle Verantwortungspools definiert, die zumindest einen Parameter aus dem Parameterkorrelationssatz des jeweiligen Kundenqualitätsparameters enthalten;

wobei die Steuerungs- bzw. Regelungsschnittstelle Verantwortungsabteilungsschnittstellen umfasst und konfiguriert ist, um das Signal an die Verantwortungsabteilungsschnittstellen abhängig von dem bestimmten Verantwortungssatz zu senden.

**Revendications**

1. Procédé implémenté par ordinateur consistant à contrôler une performance d'un réseau (100), dans lequel le réseau (100) comprend une pluralité de composants de réseau et fournit un service de client final (50), le procédé comprenant les étapes suivantes :

   - la réception d'un set de paramètres de qualité codés (KQI) dans laquelle chaque paramètre de qualité codé ($KQI_j$) représente une caractéristique d'au moins un composant de réseau ;
   - la fourniture d'une définition de module de mappage de qualité de service (46) dépendant des composants de réseau impliqués dans le service de client final fourni (50),

      -- un set de paramètres de qualité de service (SQI) comprenant au moins un paramètre de qualité de service ($SQI_k$) pour chaque composant de réseau impliqué dans le service de client final fourni (50) ;
      -- une première fonction de corrélation (f) définissant une corrélation entre le set de paramètres de qualité codés (KQI) et le set de paramètres de qualité de service (SQI) ; et
      -- une seconde fonction de corrélation (g) définissant une corrélation entre le set de paramètres de qualité de service (SQI) et un set de paramètres de qualité de client (CQI),

   dans lequel le set de paramètres de qualité codés et le set de paramètres de qualité de service et le set de paramètres de qualité de client sont structurés en une pluralité de pools de responsabilité (48a, 48b, 48c), sachant qu'un pool de responsabilité définit un groupe de paramètres pour lesquels un département particulier d'un prestataire de services peut être responsable, tel que chaque paramètre de qualité codé et chaque paramètre de qualité de service et chaque paramètre de qualité de client appartient à au moins un pool de responsabilité (48a, 48b, 48c) ; la récupération des données d'agrément du niveau de service depuis une base de données de client final où les données d'agrément du niveau de service comprennent au moins un paramètre de qualité codé prédéterminé et/ou au moins un paramètre de qualité de service prédéterminé et/ou au moins un paramètre de qualité de client prédéterminé ;

      - l'application de la première fonction de corrélation (f) sur le set obtenu de paramètres de qualité de service (SQI) pour obtenir le set de paramètres de qualité de service (SQI) ;
      - l'application de la seconde fonction de corrélation (g) sur le set obtenu de paramètres de qualité de service (SQI) pour obtenir le set de paramètres de qualité de client (CQI) ;
      - la détermination d'une déviation des paramètres de qualité codés reçus (KQI) et/ou des paramètres de qualité de service obtenus (SQI) et/ou des paramètres de qualité de client obtenus (CQI) depuis le paramètre respectif prédéterminé des données d'agrément du niveau de service ;
      - la détermination, pour au moins une déviation déterminée depuis les données d'agrément du niveau de service, d'un set de corrélation de déviation définissant tous les paramètres qui sont en corrélation ascendante et/ou descendante avec le paramètre de déviation par l'intermédiaire de la première fonction de corrélation (f) et/ou de la seconde fonction de corrélation (g) ;
      - la détermination, pour la au moins une déviation, déterminée, d'un set de responsabilité de déviation définissant tous les pools de responsabilité (48a, 48b, 48c) contenant au moins un paramètre depuis le set de corrélation de déviation du paramètre de déviation respectif ; et
      - la sortie d'un signal représentant au moins un paramètre de qualité de client ($CQI_i$) dans lequel la sortie d'un signal comprend l'envoi d'une notification sur la déviation déterminée aux départements responsables selon le set déterminé de responsabilité de déviation.

2. Procédé selon la revendication 1, dans lequel la fonction de mappage de qualité de service (46) définit, pour chaque paramètre de qualité de client ($CQI_i$), une dépendance linéaire sur au moins un paramètre de qualité codé ($KQI_j$) par l'intermédiaire d'un set de facteurs de pondération de qualité de service.

3. Procédé conformément à l'une ou l'autre des revendications 1 et 2, dans lequel les paramètres de qualité de service ($SQI_k$) décrivent et/ou définissent une qualité d'un service et/ou de services offerts par un opérateur.

**4.** Procédé conformément à la revendication 1, 2 ou 3, dans lequel les paramètres de qualité de client ($CQI_i$) définissent au moins un aspect particulier d'une qualité de service perçue par le client final.

**5.** Procédé selon l'une quelconque des revendications précédentes, dans lequel le service de client final fourni (50) comprend une pluralité d'instances de service (36a, 36b) fournies à un client final et dans lequel la fourniture d'une fonction de mappage de qualité de service (46) comprend, pour chaque instance de service (36), la fourniture d'un module de mappage de qualité de service qui définit :

-- un set de paramètres de qualité de service comprenant au moins un paramètre de qualité de service pour chaque composant de réseau impliqué dans l'instance de service respective ;
-- une première fonction de corrélation définissant une corrélation entre le set de paramètres de mappage codés et le set de paramètres de qualité de service ; et
-- une seconde fonction de corrélation définissant une corrélation entre le set de paramètres de service et le set de paramètres de qualité de client ; et

dans lequel l'étape consistant à appliquer la fonction de mappage de qualité de service sur le set reçu de paramètres de qualité codés comprend, pour chaque instance de service, une étape consistant à appliquer le module de mappage de qualité d'instance sur le set reçu de paramètres de qualité codés afin d'obtenir un set séparé de paramètres de qualité de client pour chaque instance de service.

**6.** Procédé selon l'une quelconque des revendications précédentes, dans lequel la première fonction de corrélation définit, pour chaque paramètre de qualité de service, une dépendance linéaire sur au moins un paramètre de qualité codé par l'intermédiaire d'un set de premiers facteurs de pondération de corrélation ; et/ou dans lequel la seconde fonction de corrélation définit, pour chaque paramètre de qualité de client, une dépendance linéaire sur au moins un paramètre de qualité de service par l'intermédiaire d'un set de seconds facteurs de pondération de corrélation.

**7.** Procédé selon l'une quelconque des revendications précédentes, dans lequel la réception du set de paramètres de qualité codés comprend :

- la réception d'une pluralité de signaux de trigger représentant chacun une caractéristique d'au moins un composant de réseau ;
- la transformation de la pluralité de signaux de trigger dans le set de paramètres de qualité codés en appliquant un schéma de gradation normalisé.

**8.** Procédé selon l'une quelconque des revendications précédentes, dans lequel le set de paramètres de qualité codés et le set de paramètres de qualité de service et le set de paramètres de qualité de client sont structurés en une pluralité de pools de responsabilité tels que chaque paramètre de qualité codé et chaque paramètre de qualité de service et chaque paramètre de qualité de client appartient au moins à un pool de responsabilité et dans lequel le procédé comprend les étapes :

- la détermination, pour chaque paramètre de qualité de client dans le set obtenu de paramètres de qualité de client, d'un set de paramètres de corrélation définissant tous les paramètres de qualité codés et/ou tous les paramètres de qualité de service qui sont en corrélation ascendante et/ou descendante avec le paramètre respectif de qualité de client par l'intermédiaire de la fonction de mappage de qualité de service et/ou de la première fonction de corrélation et/ou de la seconde fonction de corrélation ;
- la détermination, pour chaque paramètre de qualité de client, d'un set de responsabilité définissant tous les pools de responsabilité contenant au moins un paramètre depuis le set de paramètres de corrélation du paramètre respectif de qualité de client ;

dans lequel l'étape consistant à sortir un signal représentant au moins un paramètre de qualité de client comprend l'envoi dudit signal aux départements responsables qui dépendent du set déterminé de responsabilité.

**9.** Produit de programme d'ordinateur comprenant un code de programme qui, lorsqu'il est chargé dans un programme d'ordinateur, provoque que le système accomplisse des étapes conformément à un procédé selon l'une quelconque des revendications précédentes.

**10.** Système (10) pour contrôler une performance d'un réseau (100), dans lequel le réseau (100) comprend une pluralité de composants de réseau et fournit un service de client final (50), le système (10) comprenant :

- une interface de trigger (18) pour recevoir un set de paramètres de qualité codés (KQI) sachant que chaque paramètre de qualité codé (KQI$_j$) représente une caractéristique d'au moins un composant de réseau ;
- un référentiel de modèles de mappage (30) pour mémoriser une définition de module de mappage de qualité de service (46) dépendant des composants de réseau impliqués dans le service de client final fourni (50),

    -- un set de paramètres de qualité de service (SQI) comprenant au moins un paramètre de qualité de service (SQI$_k$) pour chaque composant de réseau impliqué dans le service de client final fourni (50),
    -- une première fonction de corrélation (f) définissant une corrélation entre le set de paramètres de qualité codés (KQI) et le set de paramètres de qualité de service (SQI) ; et
    -- une seconde fonction de corrélation (g) définissant une corrélation entre le set de paramètres de qualité de service (SQI) et un set de paramètres de qualité de client (CQI),

dans lequel le référentiel de modèles de mappage comprend une pluralité de pools de responsabilité (48a, 48b, 48c), sachant qu'un pool de responsabilité définit un groupe de paramètres pour lesquels un département particulier d'un prestataire de services peut être responsable, tel que chaque paramètre de qualité codé et chaque paramètre de qualité de service et chaque paramètre de qualité de client appartient à au moins un pool de responsabilité (48a, 48b, 48c) ;

    - une base de données de client final mémorisant des données d'agrément du niveau de service, dans laquelle les données d'agrément du niveau de service comprennent au moins un paramètre de qualité codé prédéterminé et/ou au moins un paramètre de qualité de service prédéterminé et/ou au moins un paramètre de qualité de client prédéterminé ;
    - un moteur de mappage (12) pour appliquer la première fonction de corrélation (f) sur le set reçu de paramètres de qualité codés (KQI) afin d'obtenir le set de paramètres de qualité de service (SQI) et d'appliquer la seconde fonction de corrélation (g) sur le set obtenu de paramètres de qualité codés (KQI) pour obtenir le set de paramètres de qualité de client (CQI) ;
    - une surveillance de déviation pour déterminer une déviation des paramètres de qualité codés reçus et/ou des paramètres de qualité de service obtenus et/ou des paramètres de qualité de client obtenus depuis le paramètre respectif prédéterminé des données d'agrément du niveau de service,
    - un corrélateur de déviation pour déterminer, pour au moins une déviation déterminée depuis les données d'agrément de service, un set de corrélation de déviation définissant tous les paramètres qui sont en corrélation ascendante et/ou descendante avec le paramètre de déviation par l'intermédiaire de la première fonction de corrélation (f) et/ou de la seconde fonction de corrélation (g) ;
    - une unité d'évaluation de la responsabilité de déviation pour déterminer, pour la au moins une déviation, un set de responsabilité de déviation définissant tous les pools de responsabilité (48a, 48b, 48c) contenant au moins un paramètre depuis le set de corrélation de déviation du paramètre de déviation respectif ; et
    - une interface de contrôle pour sortir un signal représentant au moins un paramètre de qualité de client (CQI$_j$) sachant que l'interface de contrôle comprend des interfaces de département de responsabilité (20a, 20b, 20c, 20d) et est configurée pour sortir une notification sur la déviation déterminée par l'intermédiaire d'au moins une des interfaces de département de responsabilité (20a, 20b, 20c, 20d) selon le set déterminé de responsabilité.

11. Système selon la revendication 10, dans lequel le service de client final fourni comprend une pluralité d'instances de service fournies à un client final et dans lequel le référentiel de modèles de mappage mémorise, pour chaque instance de service, un module de mappage de qualité d'instance qui définit :

    -- un set de paramètres de qualité de service comprenant au moins un paramètre de qualité de service pour chaque composant de réseau impliqué dans l'instance de service respective ;
    -- une première fonction de corrélation définissant une corrélation entre le set de paramètres de qualité codés et le set de paramètres de qualité de service ; et
    -- une seconde fonction de corrélation définissant une corrélation entre le set de paramètres de qualité de service et le set de paramètres de qualité de client ; et

dans lequel le moteur de mappage est configuré pour appliquer, pour chaque instance de service, le module de mappage de qualité d'instance sur le set reçu de paramètres de qualité codés pour obtenir, pour chaque instance de service, un set séparé d'indicateurs de qualité de client.

12. Système selon l'une ou l'autre des revendications 10 et 11, dans lequel l'interface de trigger comprend une pluralité de composants d'adaptateur pour recevoir une pluralité de signaux de trigger représentant chacun une caractéristique d'au moins un composant de réseau et dans lequel la pluralité de composants d'adaptateur est configurée pour transformer la pluralité de signaux de trigger dans le set de paramètres de qualité codés en appliquant un schéma de gradation normalisé.

13. Système selon l'une quelconque des revendications 10 à 12, dans lequel le référentiel de modèles de mappage comprend une pluralité de pools de responsabilité tels que chaque paramètre de qualité codé et chaque paramètre de qualité de service et chaque paramètre de qualité de client appartient au moins à un pool de responsabilité et dans lequel le système comprend en outre :

    - un corrélateur pour déterminer, pour chaque paramètre de qualité de client dans le set obtenu de paramètres de qualité de client, un set de corrélation de paramètres définissant tous les paramètres de qualité codés et/ou tous les paramètres de qualité de service qui sont en corrélation ascendante et/ou descendante avec le paramètre respectif de qualité de client par l'intermédiaire de la fonction de mappage de qualité de service et/ou de la première fonction de corrélation et/ou de la seconde fonction de corrélation ; et
    - une unité d'évaluation de responsabilité pour déterminer, pour chaque paramètre de qualité de client, un set de responsabilité définissant tous les pools de responsabilité contenant au moins un paramètre depuis le set de corrélation de paramètres du paramètre respectif de qualité de client ; et

dans lequel l'interface de commande comprend des interfaces de département de responsabilité et est configurée pour envoyer ledit signal aux interfaces de département de responsabilité selon le set déterminé de responsabilité.

# FIG 1

EP 1 784 027 B1

FIG 2

Device — 102

WAP

Access NW (RAN) — 106

Core — 108

112

WAP GW — 110

WAP Portal — 114

Internet Portal — 116

International Download Centre (IDC) — 118

Internet

104

100

EP 1 784 027 B1

29

FIG 3A

Business 20a 20b 20c Consumer

26 CustDB

Sales | Marketing | CC | other

10

16

12

14

24

18

CSK

30

SLA
Contract data

Service & SLA Management

28

KQI

Topology, Inventory | Trouble & Change Ticket | Alarms/ Threshold violations | KPI, CDRs e2e results

DWH (KPI/KQI)

R&SI

Config- uration Mgmt | Operations Mgmt | Event Mgmt | Perfor- mance Mgmt

22a

22d | 22c | 22b

Config Data | Alarms /Events | Counters/ Measurements

Network

100

FIG 3B

EP 1 784 027 B1

FIG 4

46 →

CQI — Quality perceived by the User

} g

SQI — Service Quality

} f

KQI — Technology & Process Quality

KPI
PPI
OPI

# FIG 5

## FIG 6A

| Device | Access | Core | | Application | IP | 3rd party |
|--------|--------|------|--|-------------|-----|-----------|
| Mobile | UMTS | Mobile Network | IP Network | Portal | Internet | Web Server |
| Data-Card | GPRS | | | Web Surfing | | Free URL |
| PDA | WLAN | | | File Download | | Internet Services |

52a — Mobile
52b — Data-Card
52c — PDA

54a, 54b — GPRS
54c — WLAN

36a

56a — Mobile Network
56b — IP Network

50 — Portal
58b 58a
58c — File Download

60 — Internet

62a — Web Server
62b — Free URL
62c — Internet Services

36b

EP 1 784 027 B1

34

FIG 6B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **F. Liberal et al.** Application of General Perception-Based QoS Model to Find Providers' Responsibilities. Case Study: User Perceived Web Service Performance. *proceedings of the 2005 joint international conference on autonomic and autonomous systems and international conference on networking and services,* 2005, 1-6